(19) Europäisches Patentamt

European Patent Office

Office européen des brevets

(11) EP 3 978 889 A1

(12) EUROPEAN PATENT APPLICATION

(43) Date of publication:
06.04.2022 Bulletin 2022/14

(51) International Patent Classification (IPC):
**G01M 1/12** *(2006.01)*

(21) Application number: 21200418.8

(22) Date of filing: 01.10.2021

(52) Cooperative Patent Classification (CPC):
**G01M 1/12;** G01G 19/083

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.10.2020 US 202063086282 P**

(71) Applicant: **Hyster-Yale Group, Inc.
Fairview, OR 97024 (US)**

(72) Inventor: **NIKOLAOU, Pantelis
Fairview, OR, 97024 (US)**

(74) Representative: **Bardehle Pagenberg
Partnerschaft mbB
Patentanwälte Rechtsanwälte
Prinzregentenplatz 7
81675 München (DE)**

(54) **DYNAMIC LOAD CENTER-OF-GRAVITY DETECTION**

(57) A method determines the combined center of gravity for a materials-handling vehicle (100) and its payload (110). The method picks up the payload (110), positions the payload (110) to a first height; subjects the vehicle (100) to a first acceleration force, determines a first pressure in a tilt cylinder (140), positions the payload (110) to a second height, subjects the vehicle (100) to a second acceleration force, determines a second pressure in the tilt cylinder (140), and calculates a position of the combined center of gravity of the vehicle (100) and payload (110). A materials-handling vehicle (100) incorporates a mast (120), lift carriage (130) configured to move a payload (110) vertically, tilt cylinder (140), pressure sensor (150) configured to measure a pressure within the tilt cylinder (140), and processor (190) configured to calculate a position of the combined center of gravity of the vehicle (100) and the payload (110).

FIG. 1

**Description**

Cross Reference to Related Application

This application claims priority under 35 U.S.C. § 119(e) to United States Provisional Patent Application No. 63/086,282, entitled "Dynamic Load COG Detection" filed October 1, 2020. The entire disclosure of that provisional patent application is incorporated by reference herein.

Technical Field

The field of this disclosure relates generally to materials-handling vehicles. More specifically, this disclosure relates to methods of detecting the combined center of gravity (COG) of a load carried by a materials-handling vehicle.

Background

Materials-handling vehicles, including lift trucks, are commonly used in industrial facilities to lift and transport materials. The load that the vehicle transports, also called a payload, contributes to the combined center of gravity (COG) of the loaded vehicle. Predicting the COG is difficult, such as with payloads having a non-uniform distribution of mass and when the vehicle and/or lift mechanism is in motion. In the absence of a reliable method of identifying the combined COG, the stability and productivity of industrial vehicles may suffer.

Overview of Disclosure

Dynamic stability systems and strategies are being developed to improve the productivity and stability of industrial vehicles, such as fork lift trucks, under various operating conditions. The combined center of gravity ("COG") of the industrial vehicle, in the case of a fork lift truck comprising a vehicle body, a mast, and a payload carried by the mast, is being used to determine a host of operating characteristics and limits. Although the horizontal and vertical location of the COG's of the structural components of the industrial vehicle are well known, the horizontal and vertical location of the COG of a payload borne by an industrial vehicle often cannot be accurately predicted in real time on the vehicle. Various factors contribute to the difficulty of determining the location of the COG of the payload in real time on the vehicle. One such factor is the non-uniform size and shape of various payloads, for example, payloads are rarely a cube. Another such factor is that the distribution of mass within a payload is rarely uniform.

In current dynamic stability systems and strategies, identifying a location for a COG of a payload is often addressed by assuming the payload's COG's position. For example, a payload's COG may be based on statistical estimations of typical payloads carried by an industrial vehicle. To add a margin of error for current dynamic stability systems and strategies, such estimations may include one or more conservative estimates, for example, an assumption that the COG is located higher than normal for a typical payload, that the payload COG is further from a COG of the industrial vehicle than is normal for a typical payload, or both. Such conservative estimates for the COG location of a payload may lead to conservative allowable vehicle characteristics, limits, or both, such as maximum velocity, maximum rate of steering change, or other suitable characteristic or limit, that may reduce the industrial vehicle's productivity compared to using a payload COG location that is actually at the location of the payload's COG.

Embodiments described herein may identify systems and methods for dynamically determining the location of the COG of a payload born by an industrial vehicle. Such determinations may occur in real time under operational conditions.

To gain insight, first the static equilibrium then the quasi-static equilibrium of a forklift truck are described. The static equilibrium may be used to provide information about the horizontal position of the payload's COG location. The quasi-static equilibrium may be used to derive the vertical position of the payload's COG.

Based on the insight and information gained from analysing the static equilibrium then the quasi-static equilibrium, a full dynamic equilibrium may be assessed by creating a free body diagram ("FBD") of a forklift truck from which the equations of motion may be derived by applying Newton's 2nd law. The use of the algorithm described below is based on the dynamic equilibrium of a forklift truck's front end when carrying a payload, where the derived differential equations of motion may be formed by applying Newton's 2nd law to the front end's FBD about its pivoting point, for example, where a mast is pivotally connected to a forklift truck body.

For some embodiments, an algorithm that may be used to dynamically derive the position of the payload's COG in real time is described below. For some embodiments, the described algorithm may be used to determine the horizontal and vertical COG positions of the payload with an inaccuracy of less than 20% for one or both of the horizontal position and the vertical position. The horizontal coordinates and the vertical coordinates determined for the payload's COG position may be used as inputs for a stability control programme enacting a stability control strategy. For some embodiments, the algorithm described below may provide the position of the payload's COG with an accuracy that is at least 50 percent greater than currently assumed or statistically derived values for the location of a payload's COG that are currently used in stability control programs.

Embodiments described below may be used to improve the dynamic stability program output and increase the productivity of a forklift truck. The described embodiments may be used to determine the horizontal and vertical coordinates of a payload's COG by using variable inputs where the values may be measured by sensors such as lift cylinder pressure sensors, tilt cylinder pressure sensors, a sensor that detects the mast tilting angle, and non-sensory inputs such as the mast's geometric dimensions relating to the position of its pivoting point and the tilt cylinder pivot points.

The location of the payload's COG determined by various embodiments may be validated by performing a series of tests utilizing different payloads and at different lifted heights. For example, the COG of the payload and the mass of the payload used in an embodiment may be measured in advance with the COG position values noted and compared against the values determined by an embodiment. In some embodiments, the measured values may be compared against the derived values from the embodiment and have a resulting maximum deviation of 2.7% for at least the horizontal position of the payload's COG, the vertical position of the payload's COG, or both.

One aspect of this disclosure relates to methods for determining the position of a combined center of gravity of a materials-handling vehicle and a payload carried by the materials-handling vehicle. In an embodiment, a method for determining the position of a combined center of gravity of a materials-handling vehicle and a payload carried by the materials-handling vehicle, where the materials-handling vehicle comprises a mast, a lift carriage connected to the mast and configured to move the payload vertically, a tilt cylinder connected to the mast and configured to tilt the mast, and a pressure sensor connected to the tilt cylinder and configured to measure a pressure within the tilt cylinder, has steps including picking up the payload with the materials-handling vehicle; positioning the payload to a first height on the lift carriage; subjecting the materials-handling vehicle to a first acceleration force in a longitudinal direction for a first period of time while the payload is at the first height; determining, with the pressure sensor, a first pressure in the tilt cylinder during the first period of time; positioning the payload to a second height on the lift carriage; subjecting the materials-handling vehicle to a second acceleration force in the longitudinal direction for a second period of time while the payload is at the second height; determining, with the pressure sensor, a second pressure in the tilt cylinder during the second period of time; and calculating, based on the first pressure and the second pressure, a position of the combined center of gravity of the materials-handling vehicle and the payload.

One will appreciate, however, that methods of determining the position of a combined center of gravity of a materials-handling vehicle and a payload carried by the materials-handling vehicle using other advantageous steps described herein are also possible.

One aspect of this disclosure relates to materials-handling vehicles that incorporate a mast; a lift carriage connected to the mast and configured to move the payload vertically; a tilt cylinder connected to the mast and configured to tilt the mast; a pressure sensor connected to the tilt cylinder and configured to measure a pressure within the tilt cylinder; and a processor electrically connected to the pressure sensor and configured to calculate, based on two different pressures measurements from the pressure sensor, a position of the combined center of gravity of the materials-handling vehicle and the payload, a first pressure measurement taken when the payload is positioned at a first height on the lift carriage while the materials-handling vehicle is subjected to a first acceleration force in a longitudinal direction, and a second pressure measurement taken when the payload is positioned at a second height on the lift carriage while the materials-handling vehicle is subjected to a second acceleration force in the longitudinal direction.

In some additional, alternative, or selectively cumulative embodiments, the materials-handling vehicle is a forklift truck.

In some additional, alternative, or selectively cumulative embodiments, calculating and/or determining the position of the combined center of gravity of a materials-handling vehicle and a payload is based on the following equation:

$$(J_{pl}+J_{mast}+J_{crg}+J_{forks})\ddot{\theta} + m_{pl}\ddot{\theta}h_{pl}^{2} - m_{pl}\ddot{z}_5 h_{pl}\sin\theta + m_{pl}\ddot{x}_5 h_{pl}\cos\theta - m_{pl}gh_{pl}\sin\theta$$

$$- m_{pl}\ddot{z}_5 \ell_{pl}\cos\theta + m_{pl}\ddot{\theta}\ell_{pl}^{2} - m_{mast}\ddot{z}_5 \ell_{mast}\cos\theta - m_{mast}\ddot{z}_5 h_{mast}\sin\theta + m_{mast}\ddot{\theta}\ell_{mast}^{2}$$

$$+ m_{mast}\ddot{\theta}h_{mast}^{2} - m_{crg}\ddot{z}_5 \ell_{crg}\cos\theta - m_{crg}\ddot{z}_5 h_{crg}\sin\theta + m_{crg}\ddot{\theta}\ell_{crg}^{2} + m_{crg}\ddot{\theta}h_{crg}^{2}$$

$$- m_{forks}\ddot{z}_5 \ell_{forks}\cos\theta - m_{forks}\ddot{z}_5 h_{forks}\sin\theta + m_{forks}\ddot{\theta}\ell_{forks}^{2} + m_{forks}\ddot{\theta}h_{forks}^{2}$$

$$- m_{pl}\ddot{x}_5 \ell_{pl}\sin\theta - m_{mast}\ddot{x}_5 \ell_{mast}\sin\theta + m_{mast}\ddot{x}_5 h_{mast}\cos\theta$$

$$- m_{crg}\ddot{x}_5 \ell_{crg}\sin\theta + m_{crg}\ddot{x}_5 h_{crg}\cos\theta - m_{crg}\ddot{x}_5 \ell_{crg}\sin\theta$$

$$- m_{forks}\ddot{x}_5 \ell_{forks}\sin\theta + m_{forks}\ddot{x}_5 h_{forks}\cos\theta - m_{pl}g\ell_{pl}\cos\theta$$

$$- m_{mast}g\ell_{mast}\cos\theta - m_{mast}gh_{mast}\sin\theta - m_{crg}g\ell_{crg}\cos\theta - m_{crg}gh_{crg}\sin\theta$$

$$- m_{forks}g\ell_{forks}\cos\theta - m_{forks}gh_{forks}\sin\theta$$

$$+ F_{cyl}\cos\gamma(z_{11}-z_5) - F_{cyl}\sin\gamma(x_{11}-x_5) = 0.$$

In some additional, alternative, or selectively cumulative embodiments, the method includes transferring the calculated position of the combined center of gravity to a vehicle control system.

In some additional, alternative, or selectively cumulative embodiments, the method includes calculating the combined center of gravity by calculating a vertical component of the combined center of gravity; and calculating a horizontal component of the combined center of gravity in the longitudinal direction.

In some additional, alternative, or selectively cumulative embodiments, the method includes positioning a payload to a first height on a lift carriage, which includes lifting the payload from the ground to the first height, and positioning the payload to a second height on the lift carriage, which includes further lifting the payload from the first height to the second height, which is greater than the first height.

In some additional, alternative, or selectively cumulative embodiments, the method includes calculating the position of the center of gravity of a payload.

In some additional, alternative, or selectively cumulative embodiments, a materials-handling vehicle employs a vehicle control system that is operably connected to a processor and configured to receive the calculated combined center of gravity.

In some additional, alternative, or selectively cumulative embodiments, a materials-handling vehicle calculates a combined center of gravity that comprises a vertical component of the combined center of gravity and a horizontal component of the combined center of gravity in the longitudinal direction.

In some additional, alternative, or selectively cumulative embodiments, a materials-handling vehicle calculates the position of the center of gravity of a payload.

Additional aspects and advantages will be apparent from the following detailed description of example embodiments, which proceeds with reference to the accompanying drawings.

Brief Description of the Drawings

Figure 1 is a side view of a forklift truck showing the movement of the combined COG when a payload is lifted, according to one embodiment.

Figure 2 is an example table of data for a materials-handling vehicle and a payload, according to one embodiment.

Figure 3 is a side view of a forklift truck illustrating a determination of the horizontal COG position of the empty truck and for the horizontal COG position of a payload, according to one embodiment.

Figure 4 is a side view of a forklift truck illustrating a determination of the vertical COG position of an empty truck, according to one embodiment.

Figure 5 is an example translation of the total COG when a load is being lifted and its position on the stability triangle, according to one embodiment.

Figure 6 illustrates example forward and lateral stability angles alpha and beta and the influence on them when adding extra counterweight, according to one embodiment.

Figure 7 illustrates example acceleration forces Fa, Fy and gravitational force mg, algebraically added together to form the resultant forces R and Q, according to one embodiment.

Figure 8 illustrates an example side view of a forklift truck showing the moment that the rear axle force at point C is equal to zero, according to one embodiment.

Figure 9 illustrates an example view of a plane through points KET showing the lateral acceleration force FY and the gravitational force mg, according to one embodiment.

Figure 10 illustrates an example askew stability triangle ABC' due to the higher located pivoting joint of the rear axle, according to one embodiment.

Figure 11 is an example side view of a forklift truck's front-end with a load and relevant forces, according to one embodiment.

Figure 12 is an example free body diagram of a vehicle's front end and the payload, according to one embodiment.

Figure 13 illustrates an example table of geometric and gravitational data for an example model built in AMESIM, according to one embodiment.

Figure 14 is an example model for calculating a COG's horizontal and vertical position, according to one embodiment.

Figure 15 illustrates an example dashboard showing the ordinate, the abscissa, and the angle alpha of the COG position, according to one embodiment.

Figure 16 illustrates an example free body diagram of a basic forklift truck and a front end, according to one embodiment.

Figure 17 illustrates an example derivation of the position, velocity and acceleration of point 4 in relation to mb, according to one embodiment.

Figure 18 illustrates an example Coefficient A, according to one embodiment.

Figure 19 illustrates an example Coefficient B, according to one embodiment.

Figures 20A through 20D illustrate an example Coefficient C where connections between each segment, A-D, flow down the page with bottom portions of one segment being reproduced at the top of the next segment to illustrate the connections.

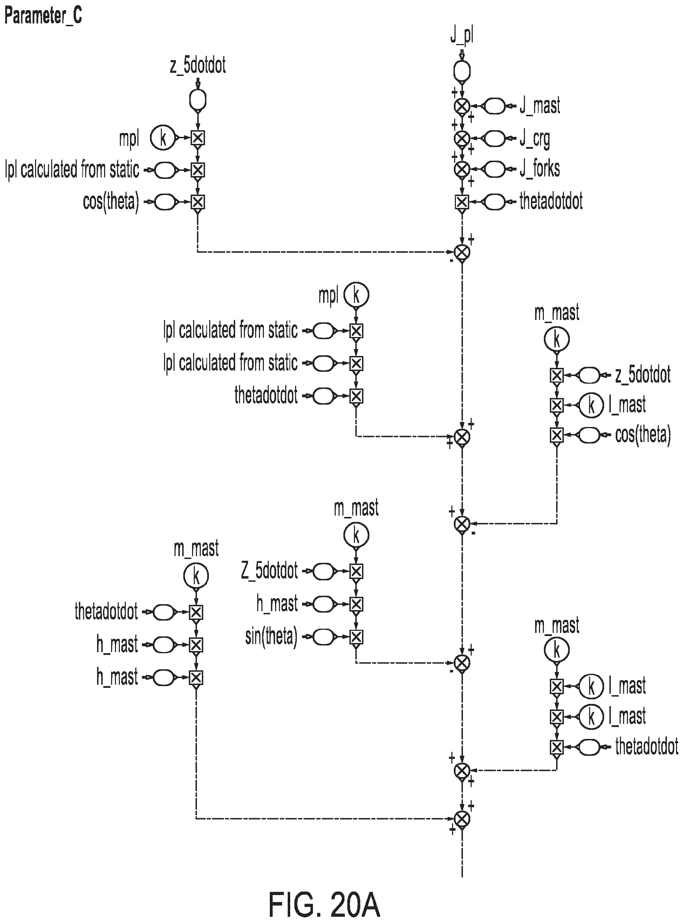

Figure 20A illustrates an example Coefficient C, according to one embodiment.

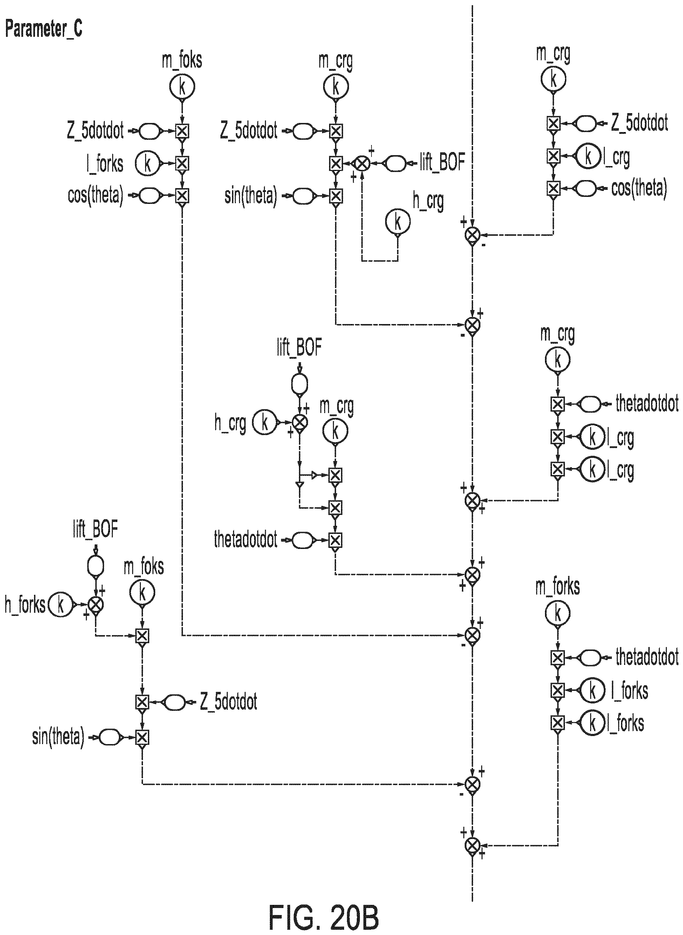

Figure 20B illustrates an example Coefficient C, according to one embodiment.

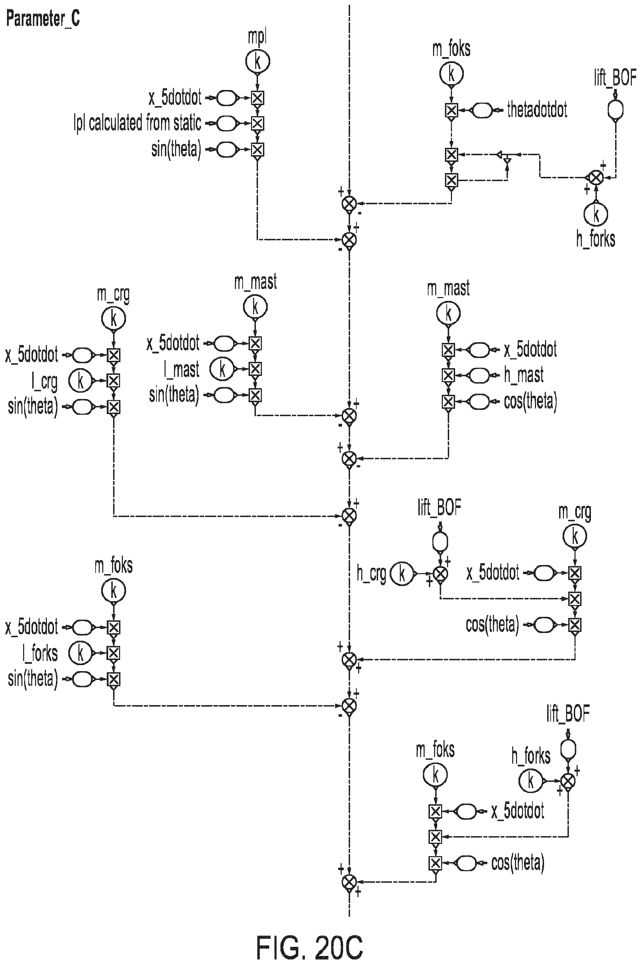

Figure 20C illustrates an example Coefficient C, according to one embodiment.

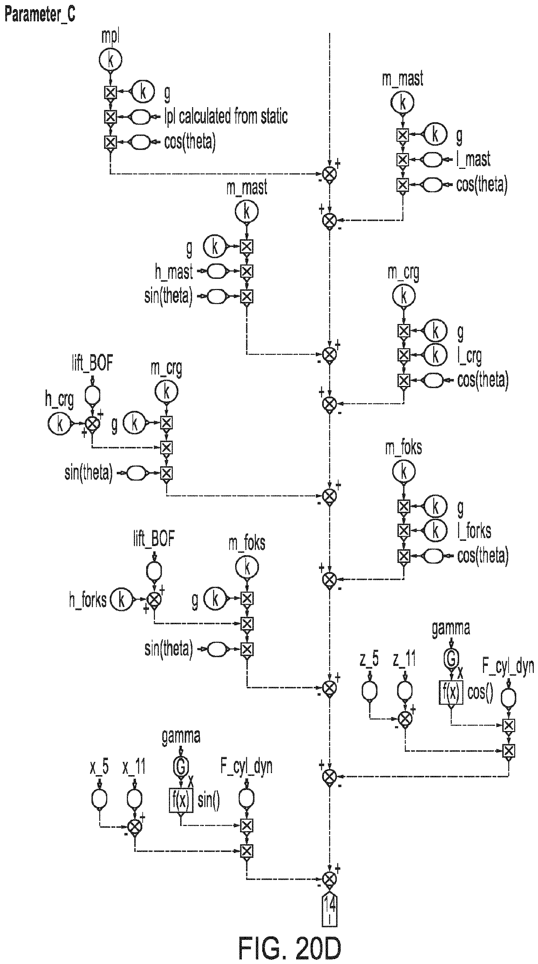

Figure 20D illustrates an example Coefficient C, according to one embodiment.

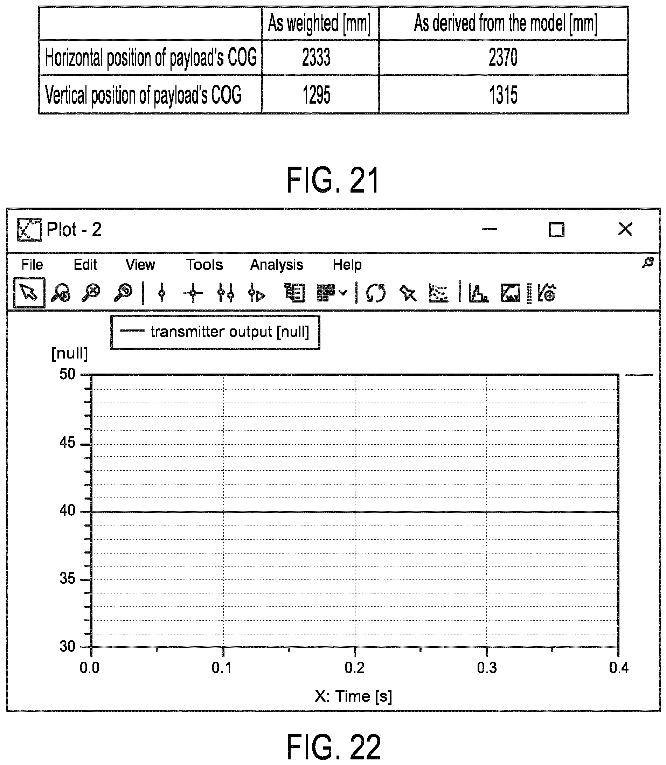

Figure 21 illustrates an example table of an example comparison between model COG position determination and static COG position determination, according to one embodiment.

Figure 22 illustrates an example Parameter A, in [kg rad][s2], according to one embodiment.

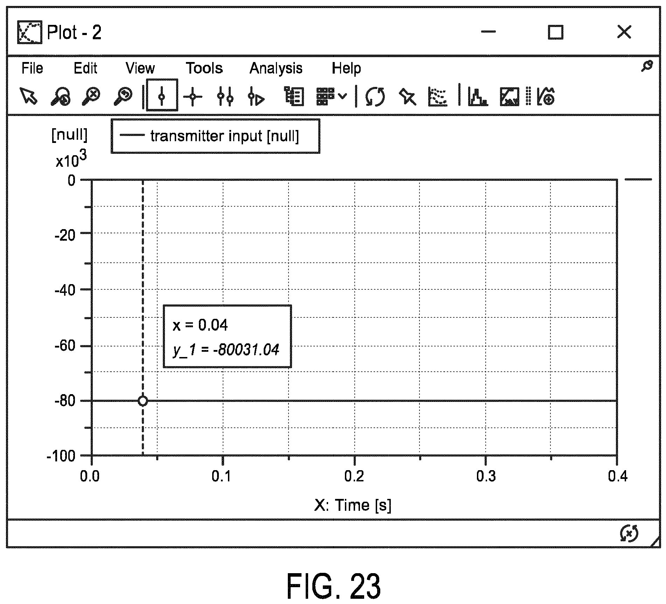

Figure 23 illustrates an example Parameter B, in [kg rad m][s2], according to one embodiment.

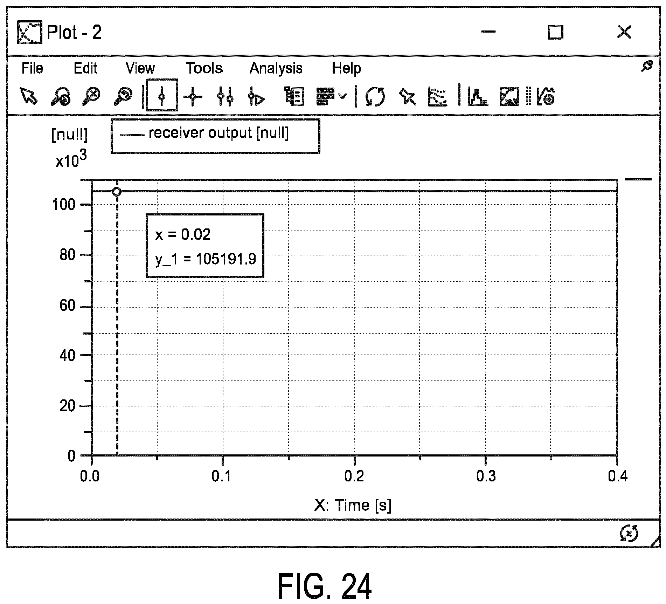

Figure 24 illustrates an example Parameter C, in [kg rad m2][s2], according to one embodiment.

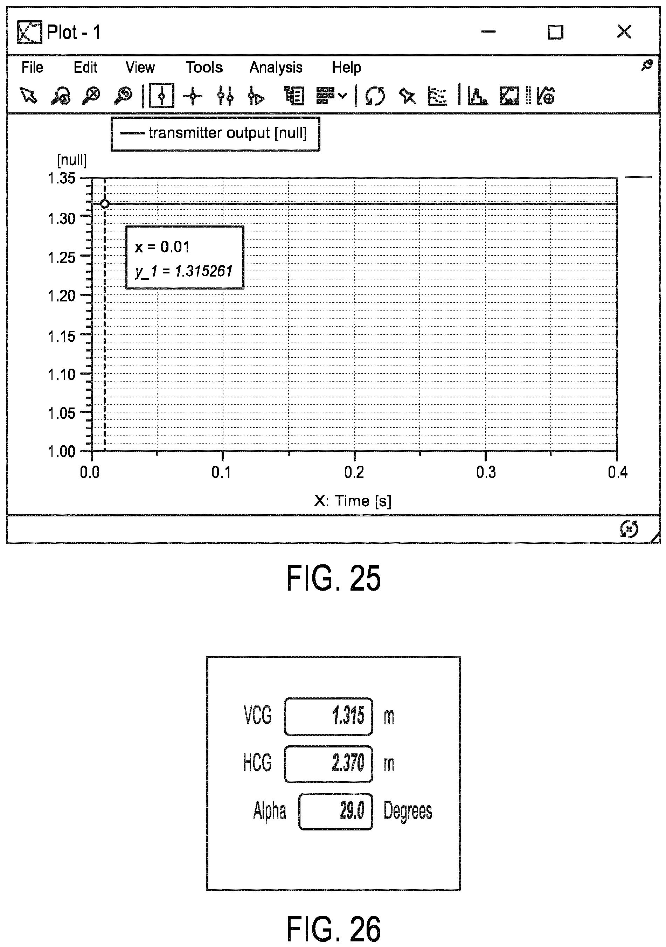

Figure 25 illustrates an example output from the quadratic formula for the payload's vertical COG location, in [m], according to one embodiment.

Figure 26 illustrates an example COG location for a payload, together with the angle formed between the virtual line from the mast pivot point to the COG location and the virtual line from the mast pivot point extending parallel with the surface supporting a forklift truck, according to one embodiment.

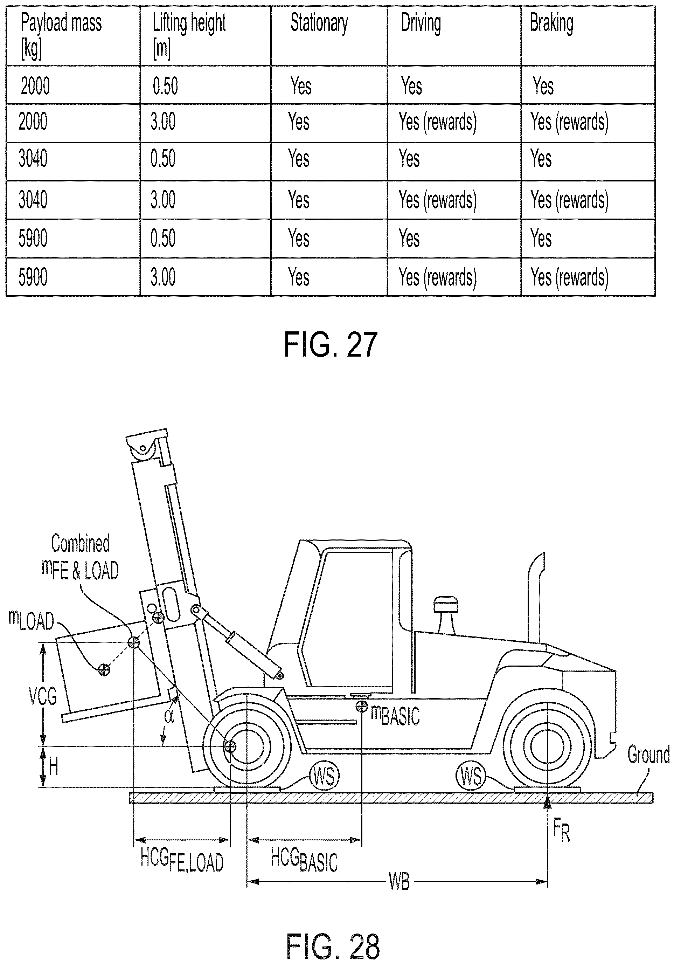

Figure 27 is an example table for example test conditions, according to one embodiment.

Figure 28 is an example side view of a forklift truck, illustrating an example validation for an example combined COG of the front end plus the payload by measuring the rear reaction force with weighing scales, according to one embodiment.

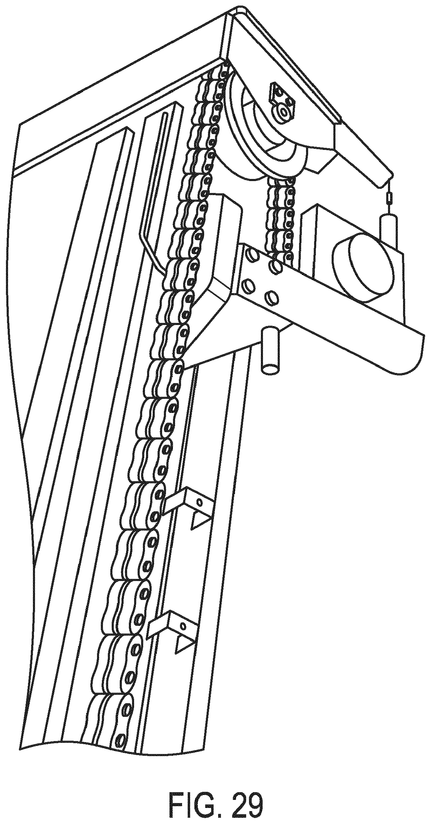

Figure 29 is a line drawing generated from a photograph of a forklift truck having a lift height sensor and a string potentiometer, according to one embodiment.

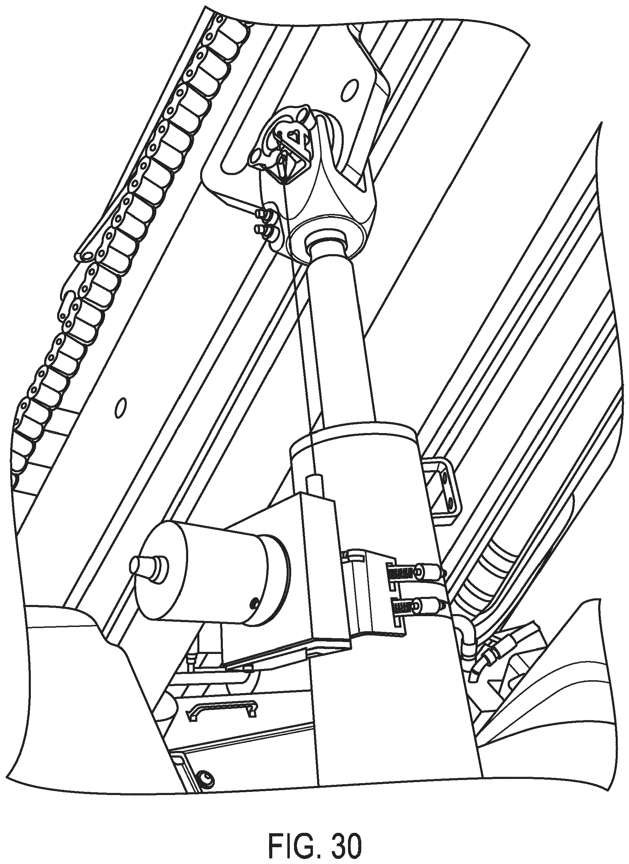

Figure 30 is a line drawing generated from a photograph of the forklift truck of Figure 29, showing a tilt cylinder stroke sensor and a string potentiometer.

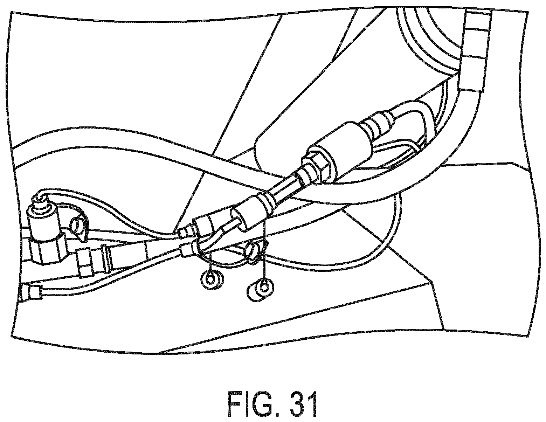

Figure 31 is a line drawing generated from a photograph of the forklift truck of Figure 29, showing a tilt cylinder pressure transducer.

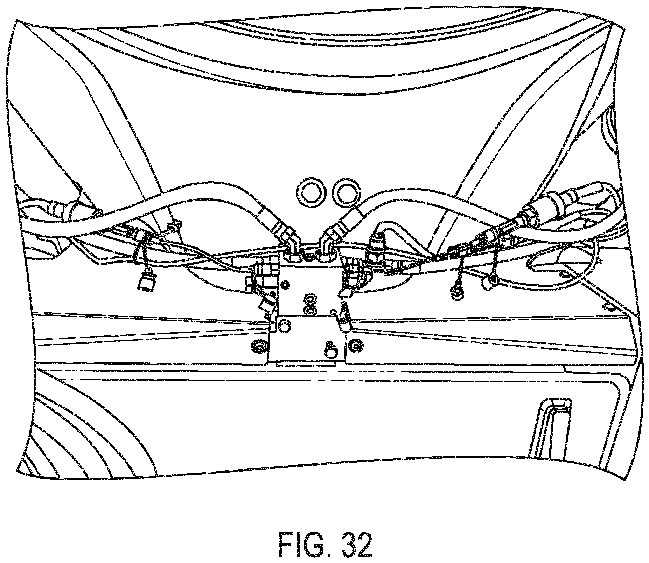

Figure 32 is a line drawing generated from a photograph of the forklift truck of Figure 29, showing multiple tilt cylinder pressure transducers.

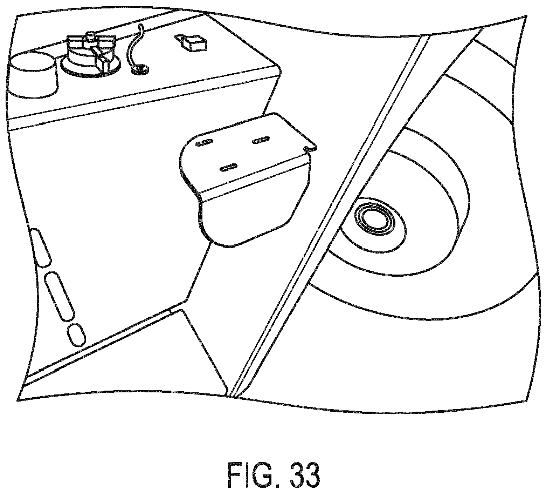

Figure 33 is a line drawing generated from a photograph of the forklift truck of Figure 29, showing a bracket for an inertial measurement unit (IMU) sensor on the left hand rear side of the truck.

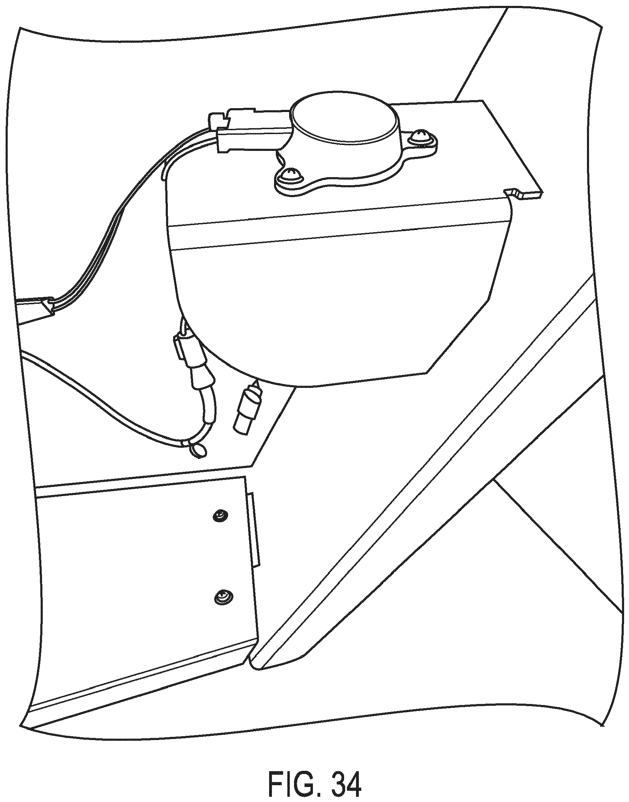

Figure 34 is a line drawing generated from a photograph of the forklift truck of Figure 29, showing the IMU sensor in the bracket on the left hand rear side of the truck.

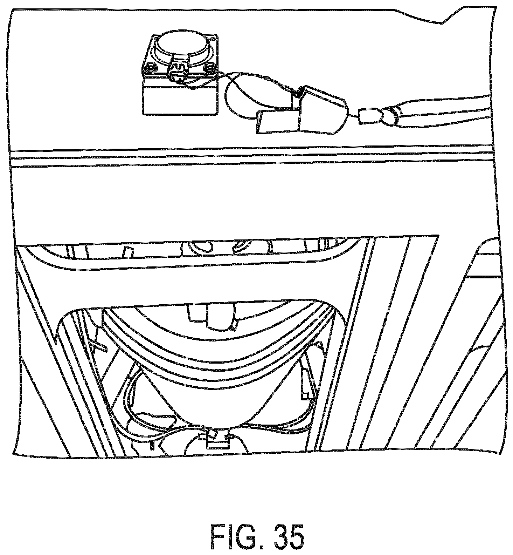

Figure 35 is a line drawing generated from a photograph of the forklift truck of Figure 29, showing an IMU sensor at the top of the inner mast of the truck.

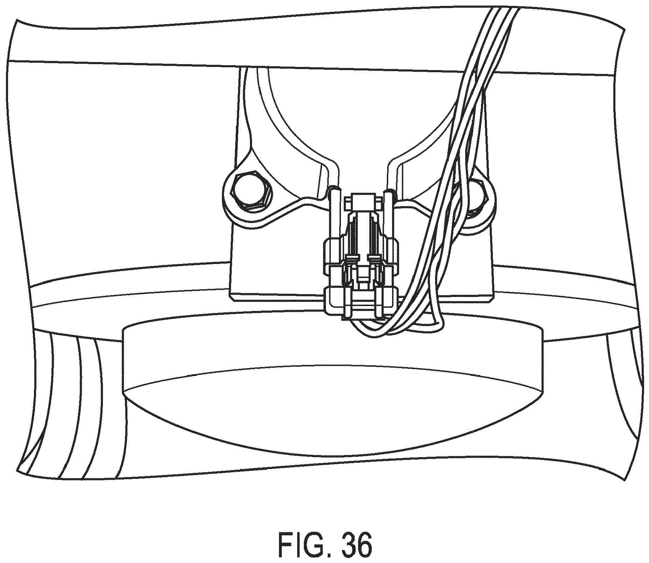

Figure 36 is a line drawing generated from a photograph of the forklift truck of Figure 29, showing an IMU sensor at the top and at the center of the front axle of the truck.

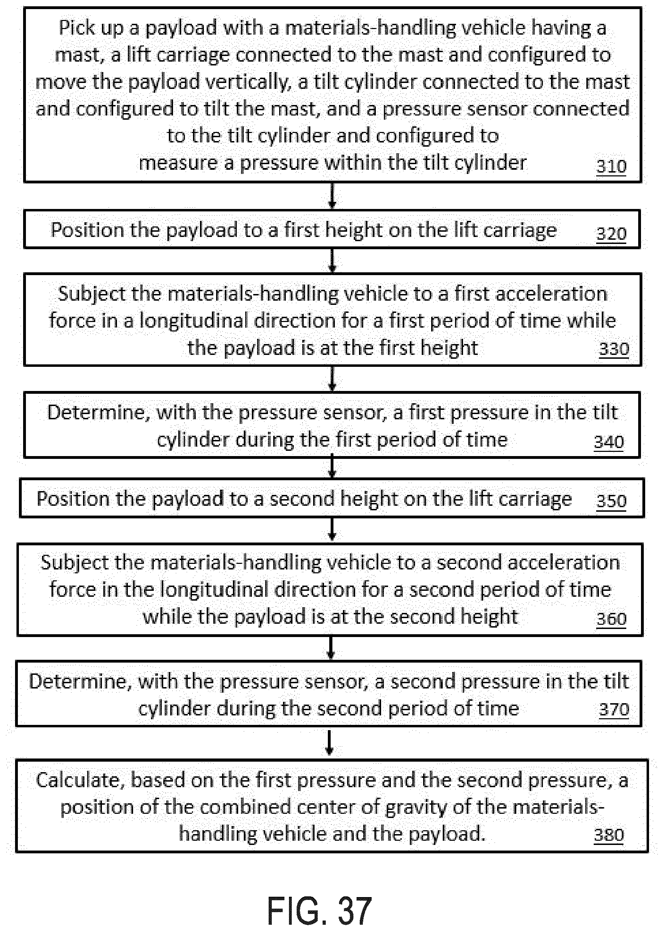

Figure 37 illustrates an example method of determining the position of a combined center of gravity of a materials-handling vehicle and a payload carried by the materials-handling vehicle, according to one embodiment.

Detailed Description of Embodiments

Example embodiments are described below with reference to the above-listed drawings. The terminology used herein is for the purpose of describing particular example embodiments only and is not intended to be limiting. As used herein, the singular forms "a," "an" and "the" are intended to include the plural forms as well, unless the context clearly indicates otherwise. It should be recognized that the terms "comprise," "comprises," "comprising," "include," "includes," "including," "has," "have," and "having," when used in this document and open-ended, specify the presence of stated features, integers, steps, operations, elements, and/or components, but do not preclude the presence or addition of one or more other features, integers, steps, operations, elements, components, and/or groups thereof.

Unless otherwise expressly stated, the sizes, positions, etc., of components, features, elements, etc., as well as any distances therebetween, are not necessarily to scale, and may be disproportionate and/or exaggerated for clarity. Unless indicated otherwise, the terms "about," "thereabout," "substantially," "approximately," etc. mean that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. In certain embodiments, the terms "about," "substantially," and "approximately," refer to values that are, for example, within 1% of the stated value, within 2% of the stated value, within 3% of the stated value, within 4% of the stated value, within 5% of the stated value, within 6% of the stated value, within 7% of the stated value, within 8% of the stated value, within 9% of the stated value, within 10% of the stated value, within 11% of the stated value, within 12% of the stated value, within 13% of the stated value, within 14% of the stated value, or within 15% of the stated value. In an embodiment, the terms "about," "substantially," and "approximately," refer to values that are within 10% of the stated value. In an embodiment, the terms "about," "substantially," and "approximately," refer to values that are within 15% of the stated value.

Unless otherwise specified, a range of values, when recited, includes both the upper and lower limits of the range, as well as any sub-ranges therebetween. Unless indicated otherwise, terms such as "first," "second," etc., are only used to distinguish one element from another and not to imply any relative order, placement, or ranking. For example, one element could be termed a "first element" and similarly, another element could be termed a "second element," or vice versa. The section headings used herein are for organizational purposes only and are not to be construed as limiting the subject matter described.

Spatially relative terms, such as "right," left," "below," "beneath," "lower," "above," and "upper," and the like, may be used herein for ease of description to describe one element's or feature's relationship to another element or feature, as illustrated in the drawings. It should be recognized that the spatially relative terms are intended to encompass different orientations in addition to the orientation depicted in the drawings. For example, if an object in the figures is turned over, elements described as "below" or "beneath" other elements or features would then be oriented "above" the other elements or features. Thus, the term "below" can, for example, encompass both an orientation of above and below. An object may be otherwise oriented (e.g., rotated 90 degrees or at other orientations) and the spatially relative descriptors used herein may be interpreted accordingly.

Unless clearly indicated otherwise, all connections and all operative connections may be direct or indirect. Similarly, unless clearly indicated otherwise, all connections and all operative connections may be rigid or non-rigid. For the purposes of the present disclosure, the phrase "A and/or B" means (A), (B), or (A and B). For the purposes of the present disclosure, the phrase "combination of (A) and (B)" means (A), (B), or (A and B). For the purposes of the present disclosure, the phrase "A, B, and/or C" means (A), (B), (C), (A and B), (A and C), (B and C), or (A, B and C).

Like numbers refer to like elements throughout. Thus, the same or similar numbers may be described with reference to other drawings even if they are neither mentioned nor described in the corresponding drawing. Also, even elements that are not denoted by reference numbers may be described with reference to other drawings. Additionally, the drawings may include non-essential elements that are included only for the sake of thoroughness. These non-essential elements may be removed entirely or left only in outline form if drawing changes are desired to create greater clarity.

The embodiments described herein are merely examples, set forth by way of illustration only and not limitation. Those skilled in the art will recognize in light of the teachings herein that there are alternatives, variations and equivalents to the example embodiments described herein and their component parts. For example, other embodiments are readily possible, variations can be made to the embodiments described herein, and there may be equivalents to the components, parts, or steps that make up the described embodiments. For the sake of clarity and conciseness, certain aspects of components or steps of certain embodiments are presented without undue detail where such detail would be apparent to those skilled in the art in light of the teachings herein and/or where such detail would obfuscate an understanding of more pertinent aspects of the embodiments.

As one skilled in the art will appreciate in light of this disclosure, certain embodiments of the detection of the dynamic COG for the materials-handling vehicles that are disclosed herein may be capable of achieving certain advantages, including, in some cases, one or more of the following: (1) providing a real-time identification of the COG of a load carried by a vehicle; (2) providing a real-time identification of the combined COG of a moving vehicle and its payload; (3) allowing for a determination of a vehicle's stability during operation; (4) allowing for a determination of a vehicle's stability while the vehicle lifts and/or carries a payload; and (5) facilitating loading vehicles such as trucks or ships based on the weight and COG location of items loaded onto the vehicle. The foregoing and other advantages of various embodiments will be apparent upon reading this document.

Nomenclature:

| Symbol | Description | Units |
|---|---|---|
| $a_x$ | Acceleration along the x-axis, longitudinal | m/s$^2$ |
| $a_z$ | Acceleration along the z-axis, vertical | m/s$^2$ |
| $J_{crg}$ | Mass moment of inertia, of the carriage | kgm$^2$ |
| $J_{forks}$ | Mass moment of inertia, of the forks | kgm$^2$ |
| $J_{mast}$ | Mass moment of inertia, of the mast | kgm$^2$ |
| $J_{pl}$ | Mass moment of inertia, of the payload | kgm$^2$ |
| $h_{crg}$ | Carriage's vertical COG position, relative to FE's pivot point | m |
| $h_{forks}$ | Forks' vertical COG position, relative to FE's pivot point | m |
| $h_{mast}$ | Mast's vertical COG position, relative to FE's pivot point | m |
| $h_{pl}$ | Payload's vertical COG position, relative to FE's pivot point | m |
| $\ell_{crg}$ | Carriage's horizontal COG position, relative to FE's pivot point | m |
| $\ell_{forks}$ | Forks' horizontal COG position, relative to FE's pivot point | m |
| $\ell_{mast}$ | Mast's horizontal COG position, relative to FE's pivot point | m |
| $\ell_{pl}$ | Payload's horizontal COG position, relative to FE's pivot point | m |
| $m_{crg}$ | mass of the carriage | kg |
| $m_{forks}$ | Mass of the forks | kg |
| $m_{mast}$ | Mass of the mast | kg |
| $m_{pl}$ | Mass of the payload | kg |
| $\alpha$ | Angle between total COG and perpendicular axis to ground denoting the forward stability | rad |
| $\beta$ | Angle between total COG and perpendicular axis to ground denoting the lateral stability | rad |
| $\gamma$ | Angle between tilt cylinder and the horizon | rad |
| $\theta$ | Tilt angle of front end | rad |
| $\ddot{\theta}$ | Angular acceleration of front end | rad/s$^2$ |
| $\varphi$ | Rotation or pitch angle of basic truck | rad |
| $\ddot{\varphi}$ | Angular acceleration of basic truck's, for pitch | rad/s$^2$ |

Embodiments described herein focus on a forklift truck. However, systems and methods described herein are applicable to other types of industrial vehicles, and the following description is not intended to limit the invention to forklift trucks.

The stability of a forklift truck is dependent on the location of its COG, comprising the COG of the fork-lit truck itself and any payload carried by the forklift truck, and its velocity, among other factors. The operating conditions for maintaining stability for a forklift truck may become more challenging to maintain the higher a payload is lifted and the faster a forklift truck operates.

Some embodiments herein describe the development, simulation, testing and validating of systems and methods used to determine the location of a payload's COG dynamically and under operating conditions.

Described herein are methods for determining the position of a combined center of gravity of a forklift truck and its payload. Based on previously knowing the center of gravity of the forklift truck, the center of gravity of the payload may be determined. The forklift truck may include a mast having a tilt cylinder connected to the mast and configured to tilt the mast, and a pressure sensor connected to the tilt cylinder and configured to measure a pressure within the tilt cylinder. The method can include the steps of subjecting the forklift to an acceleration force in a longitudinal direction for a period of time while the payload is positioned at one or more heights, to obtain data for calculating the position of the combined center of gravity of the forklift and its payload, such as pressure measurements during acceleration of the vehicle. As referred to herein, a longitudinal direction refers to a direction traveled by the forklift which can be in either a forward or reverse direction. A longitudinal direction refers to a direction traveled by the vehicle while in normal operation, and may be, for example, along a substantially flat surface such as a road, in a warehouse, or in an inventory yard.

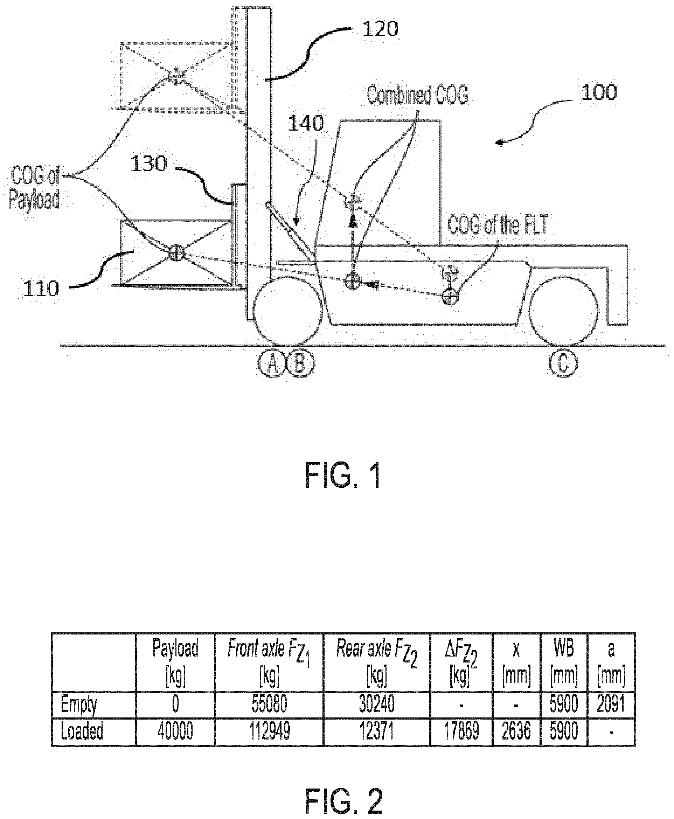

Figure 1 is an illustration showing the movement of the total COG when the load is lifted. Figure 1 shows a side view of a forklift truck carrying a payload, together with the position of the COG's of the empty lift truck, the payload, and their combined COG at two different lift heights. Figure 1 also shows that the vertical position of the empty forklift truck's COG moves up when the mast is lifted. Although the mass and position of the COG of an unloaded truck may be accurately known, the mass and position of the combined COG resulting from adding the known mass and position of the COG of the empty forklift truck with the unknown mass and position of the COG of the payload is not currently available in real time under operating conditions. The mass and position of the COG of the payload may be determined during the process of calculating the mass and position of the combined COG or they may be determined alone, in certain embodiments.

With reference to Figure 1, a materials-handling vehicle 100 includes a mast 120 and lift carriage 130, with a payload 110 on the lift carriage 130. The vehicle 100 includes a tilt cylinder 140 that is connected to the mast 120 and that is configured to tilt the mast 120. The tilt cylinder 140 may include one or more of a pressure sensor 150 (not shown) that is configured to measure a pressure within the tilt cylinder 140. The pressure sensor 150 may be electrically connected to a processor 190 (not shown) that is configured to calculate the position of the combined COG of the vehicle 100 and payload 110. The position of the combined COG may be transferred to a vehicle control system 160 (not shown), which may, in one embodiment, be operably connected to the processor 190 and be configured to receive the calculated combined COG.

How to statically determine the horizontal COG position of a vehicle and the payload.

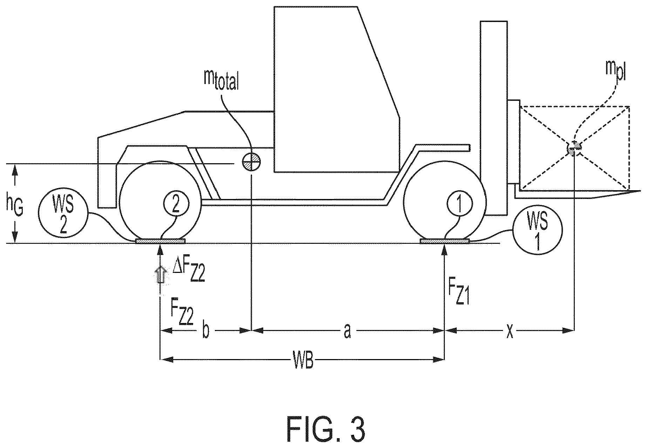

By utilizing weighing scales, the horizontal position of the COG of a forklift truck may be determined statically. On a level surface, weighing scales are put underneath the front and rear axles for measuring the axle reaction forces (see Figure 3).

With the readings of the scales, the horizontal position of the COG of an empty (*i.e.*, when in unloaded condition) lift truck can be determined. Knowing the total mass (by summing all the scale readings), the wheelbase, and the rear axle scale readings, one takes the sum of the moments about the front axle. The only unknown parameter in the equation is the horizontal position of the COG measured from the front axle, which can be calculated as per eq. 1.

For the payload now, with the knowledge of the position of the COG of the empty forklift truck, the measurement is repeated, but with a payload on the forklift truck. The horizontal position of the COG of the payload can then be derived as per eq. 2.

$$\sum\nolimits^{+\curvearrowleft} M_1 = 0 \Leftrightarrow F_{z_2} WB - m_{total}a = 0 \Leftrightarrow a = \frac{F_{z_2} WB}{m_{total}} \quad \text{eq. 1}$$

$$\sum\nolimits^{+\curvearrowleft} M_1 = 0 \Leftrightarrow m_{pl}x - \Delta F_{z_2} WB = 0 \Leftrightarrow x = \frac{\Delta F_{z_2} WB}{m_{pl}} \quad \text{eq. 2}$$

For determining the horizontal position of the COG of the payload the difference between the rear axle readings when unloaded and when loaded, that is the $\Delta F_{z_2}$, should be compared. Also, the mass of the payload should be known.

In one example, the readings for the front, the rear axle, and the derived dimension are shown for a forklift truck in Figure 2. Figure 2 is a table of readings of the weighing scales and derived dimensions.

How to statically determine the vertical COG position of a vehicle.

Determining the vertical position of the COG of the forklift truck is more complicated because it requires, for example, a lifting crane of significant capacity to lift one side of the truck. One way is to directly lift the rear or front axle to a higher position with a crane which is equipped with a load cell that directly measures the mass being lifted. At the same time, the readings of the weighing scales under the other of the front or the rear axle and the angle of the inclined vehicle with respect to the ground are also measured. This method is described as per ISO 10392: 1992.

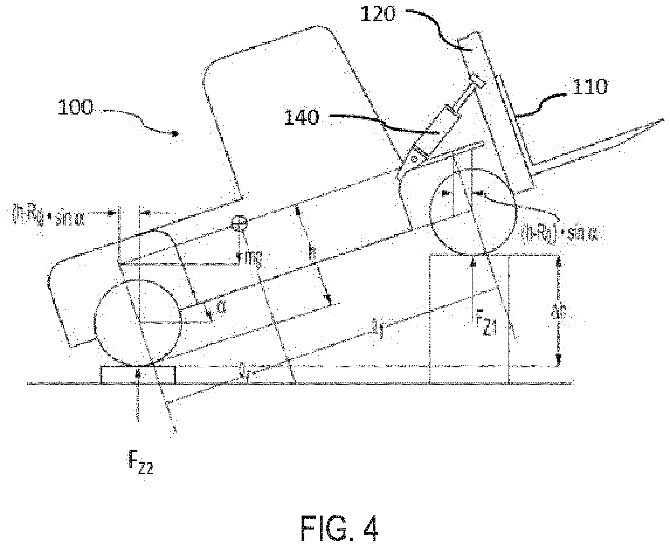

Similarly, one axle can be lifted and positioned on the weighing scales located on a top of a block as shown per Figure 3. Figure 3 illustrates an example determination of the horizontal COG position of an empty lift truck and secondly for the horizontal COG position of the payload. Figure 4 illustrates an example determination of the vertical COG position of an empty lift truck.

$$\alpha = \arcsin\frac{\Delta h}{WB} \quad \text{eq. 3}$$

$$\sum \mathbf{F_y} = \mathbf{0} \;\Leftrightarrow\; \mathbf{F_{z1}} + \mathbf{F_{z2}} = \mathbf{F_{z10}} + \mathbf{F_{z20}} = mg \qquad eq.\ 4$$

Taking the sum of the moments about the COG,

$$\sum \mathbf{M} = \mathbf{0} \;\Leftrightarrow\; (\ell_r \cos\alpha - (h-R_\ell)\sin\alpha)\, \mathbf{F_{z2}} - (\ell_f \cos\alpha + (h-R_\ell)\sin\alpha)\, \mathbf{F_{z1}} = 0 \quad eq.\ 5$$

By working out the multiplications to eliminate the parentheses and rearranging and solving for h, one gets the vertical COG position of the forklift truck as per eq. 6:

$$h = \frac{\ell_r\, \mathbf{F_{z2}} - \ell_f\, \mathbf{F_{z1}}}{\tan\alpha(\mathbf{F_{z1}} + \mathbf{F_{z2}})} + R_\ell \qquad eq.\ 6$$

With $R_\ell$, being the loaded tire radius.

In some embodiments, the above methods may provide the vertical position of a vehicle's COG with an inaccuracy between 7% to 10% provided that liquids are drained from the forklift truck and that the tires are inflated at their maximum allowable inflation pressure. However, for a forklift truck with a mass of 85 tons without the payload, such a method requires an expensive, heavy commercial crane or other suitable machine that can lift the forklift truck for a few hours. In addition, it is difficult to account for the effects of tire squatting, which negatively impacts the measurement's accuracy.

Although the above-described methods may be used to determine the horizontal and vertical position of the COG of an unloaded or a loaded vehicle, they cannot be used for a real time determination of the position of the payload's COG while a vehicle is operating.

An embodiment for deriving the position of the payload COG dynamically.

Investigating first the static, then the quasi-static, models were undertaken to provide insight into the matter of dynamically determining the horizontal and vertical positions of a payload's COG using a dynamic model.

Analyzing the forces acting upon the front end of a forklift truck when it is in static equilibrium provides insight for developing a model that will determine the mass of the payload and the horizontal position of the payload's COG when the forklift truck is not in static equilibrium as explained below.

Analyzing the forces acting upon the forklift truck using the quasi-static model described above provides insight for developing a model that will determine the vertical position of the payload's COG when the forklift truck is not in static equilibrium as described below.

The dynamic model described below employs Newton's 2nd law to vertical and longitudinal translation, and also for rotation.

Before describing the dynamic model, the stability triangle for a forklift truck is discussed because the stability triangle is a helpful concept for understanding forklift truck stability.

Lift-truck's stability triangle. Understanding the stability of a forklift truck is enhanced by understanding what is meant by its stability triangle.

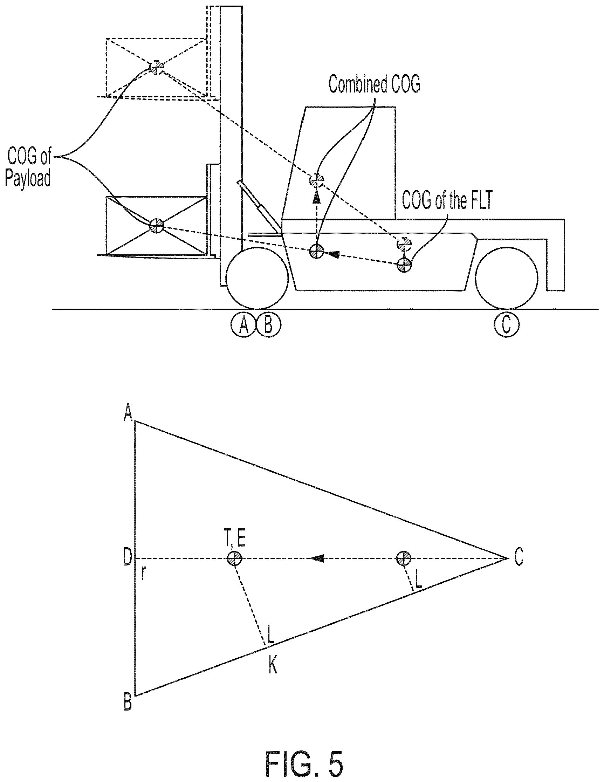

A forklift truck's stability triangle means the triangle that is formed by the front axle, specifically the imaginary lines drawn from the middle of the front tires where the front tires contact the ground, to the middle of the rear axle. In Figure 5, the stability triangle is shown as the triangle ABC. Figure 5 illustrates the translation of the total COG when the load is being lifted and its position on the stability triangle.

By assuming a symmetrically loaded forklift truck and a level surface, the position of the loaded forklift truck's COG is located at the vertical plane that goes through the longitudinal symmetry line of the lift truck. In a static case when the projection of this COG location (point T) onto the ground (point E) is located within the area of the stability triangle ABC then the truck is stable (Figure 5).

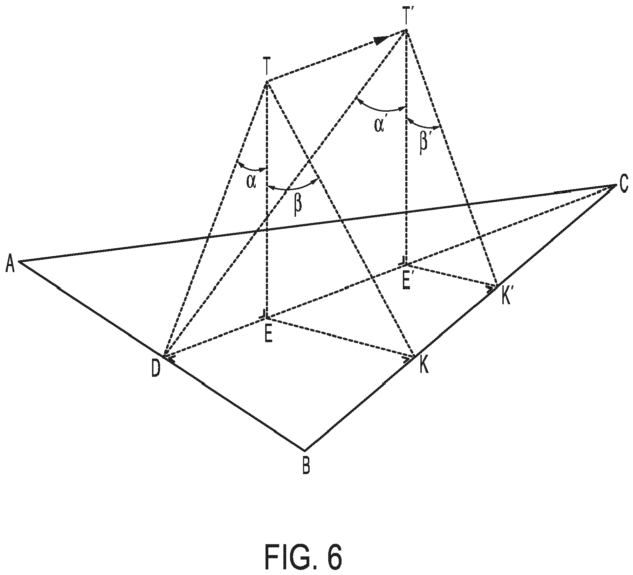

The angle alpha ($\alpha$) or the angle DTE (Figure 6), dictates the forward longitudinal stability. The angle beta ($\beta$) or angle ETK (Figure 6), dictates the lateral stability. Figure 6 illustrates forward and lateral stability angles alpha and beta and the influence on them when adding extra counterweight.

In Figure 6, by adding extra counterweight mass, the COG moves to the rear of the forklift truck, in this example from T to T'. Here, situation 1 has tan $a = \dfrac{DE}{TE}$ and tan β = $\dfrac{EK}{TE}$, and situation 2 has $\tan a' = \dfrac{DE'}{T'E'}$ and $\tan \beta' = \dfrac{E'K'}{T'E'}$. Since DE'>DE and TE = T'E', tan α' > tan α, so the forward stability increases going from situation 1 to situation 2. Since E'K'<EK and TE = T'E', tan β' < tan β, so the lateral stability decreases going from situation 1 to situation 2.

For both angles, alpha (α) formed by DTE and the angle beta (β) formed by ETK, it holds that the larger the angle is the more stable the lift truck will be. However, the higher the payload is lifted, the smaller the angles become, resulting in a less stable forklift truck longitudinally and also laterally.

The forward stability of a forklift truck can be increased by adding extra counterweight. That is where the name counter-balanced, a synonym for some types of forklift trucks, comes from. However, adding additional counterweight may impair the lateral stability of the empty lift truck. A potential increase in lateral instability is shown by comparing the angles alpha and beta between the COG location without additional counterweight (position T) against the new COG location with additional counterweight (position T') as per Figure 6.

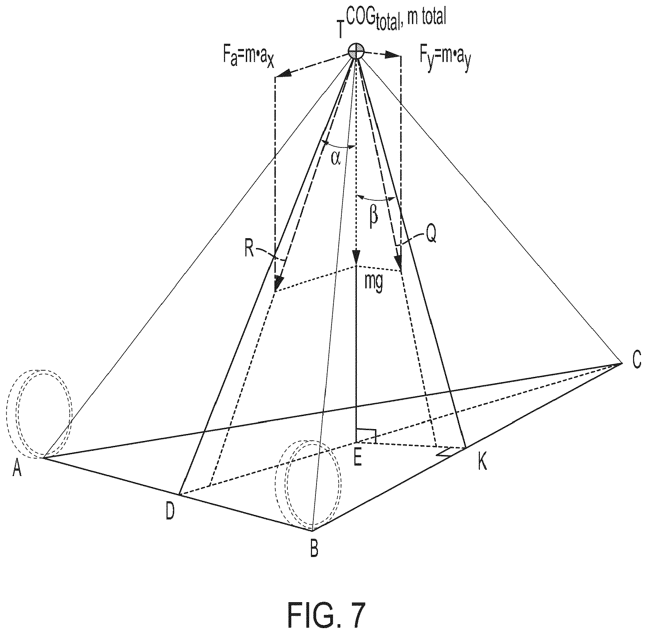

In a dynamic situation, for example during braking, the action line of the resultant force (Force R in Figure 7), formed by the algebraic addition of the acceleration force together with the gravitational force, should intersect the ground surface within the stability triangle ABC. A similar situation applies when the truck is cornering, but now for the resultant force Q (Force Q in Figure 7), which is formed by the algebraic addition of the lateral acceleration force FY together with the gravitational force mg. When projection of the action line interests the ground surface outside the stability triangle ABC, the truck may start tipping forward, or laterally, as the case may be.

Figure 7 illustrates the acceleration force Fa, Fy and gravitational force mg, are algebraically added together to form the resultant forces R and Q.

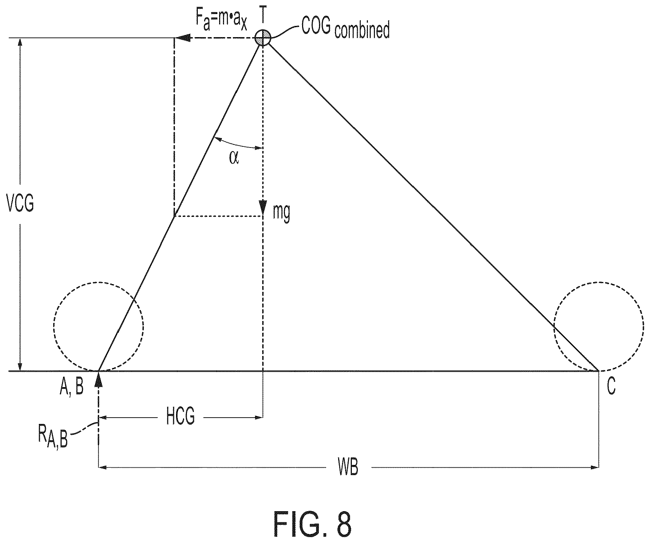

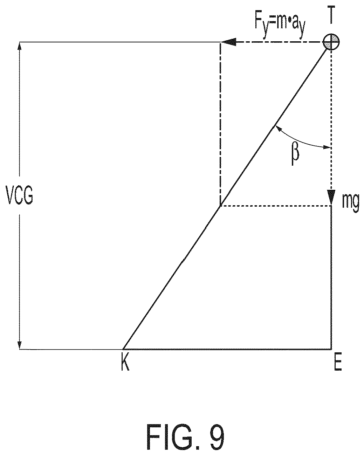

Angle alpha (α) determines the forward stability and angle beta (β) determines the lateral stability. This can be explained by viewing the pyramid ABCT of Figure 7 once from the side and once from the rear, perpendicular plane that goes through EKT as shown in Figure 8 and Figure 9.

Figure 8 is a side view of an FLT showing the moment that the rear axle force at point C is equal to zero. Figure 9 is a view of plane through KET showing the lateral acceleration force $F_Y$ and the gravitational force mg.

At the instance that the rear axle reaction becomes zero the action line of resultant force of the acceleration force Fa together with the gravitational force mg, points from T to the line AB. This may also be the beginning of a forward tipping motion. Therefore, there is a relation between the forward stability and the angle alpha that defines the maximum allowable acceleration magnitude before the truck may start a tipping motion. This can be seen as follows.

By taking the sum of the moments about the contact line AB, it follows:

$$HCG\, mg - VCG\, ma_x = 0 \iff$$

$$HCG\, mg = VCG\, ma_x \iff$$

$$a_x = \frac{HCG}{VCG}\, g \qquad\qquad\qquad \text{eq. 7}$$

$$\frac{HCG}{VCG} = tan\alpha \qquad\qquad\qquad \text{eq. 8}$$

By substituting eq. 8 into eq. 7, it gives

$$a_x = tan\alpha\, g \qquad\qquad\qquad \text{eq. 9}$$

Therefore, the maximum magnitude of the $a_x$ in g's is equal to the tangent of the angle alpha. This reinforces why the driver should drive with the load as low as possible.

During cornering, at the moment that the reaction force on the inner tire is equal to zero, the action line of the resultant force of the acceleration force FY together with the gravitational force *mg* points from T to the point K which is located on the roll axis line BC (Figure 5). This may also be the beginning of a lateral tipping motion. Therefore, there is a relation between the lateral stability and the angle beta that defines the maximum allowable acceleration magnitude before the truck may start a lateral tipping motion. This can be seen as follows.

By taking the sum of the moments about the contact point K, it follows:

$$a_y = \frac{KE}{VCG}\, \text{g} \qquad\qquad \text{eq. } 10$$

$$\frac{KE}{VCG} = tan\beta \qquad\qquad \text{eq. } 11$$

By substituting eq.11 into eq.10 it gives

$$a_y = tan\beta\, \text{g} \qquad\qquad \text{eq. } 12$$

Therefore, the maximum magnitude of the $a_y$ in g's is equal to the tangent of the angle beta. Here again the importance of keeping the load as low as possible is emphasized.

Now that the concept of the stability triangle has been discussed, a more precise definition can be given to it. It should be understood that the lateral sides of the isosceles triangle AC and BC on the ground plane are not the actual lateral rolling axes of the forklift truck. The actual stability triangle is askew with respect to the ground plane and is formed by the front axle line AB, and the lines AC' and BC', which extend from the middle of the front tires where they contact the ground to the pivot point C' of the rear axle. The lines AC' and BC' form the actual lateral rolling axes of the stability triangle. The rear axle of a forklift truck in some embodiments can rotate a few degrees around a horizontally aligned pivot joint which may help ensure that all the wheels contact the ground in case of driving over a pothole or on uneven ground. This point C' is therefore not at ground level but is approximately at the height of the rear wheel center. One advantage of point C' being located above the ground plane is that it increases the lateral stability compared to point C located on the ground. This difference can be seen in Figure 6, by comparing angles beta and beta'. Since distances EK and E'K' are equal and the tangents of the angle are equal to the quotient formed by EK over ET and E'K' over E'T it is shown that the angle beta' will be bigger than angle beta. Therefore, the lateral stability has been increased for the stability triangle ABC' compared to the stability triangle ABC.

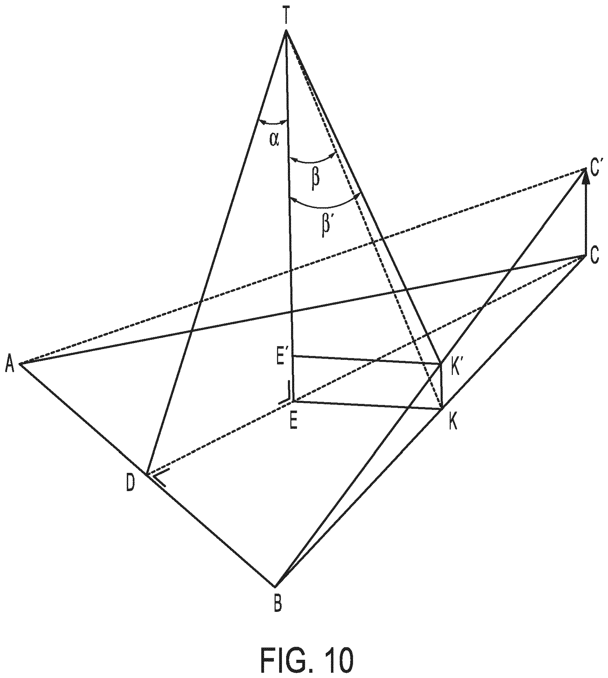

Figure 10 shows the askew stability triangle ABC' due to the higher located pivoting joint of the rear axle.

For some embodiments, because using a point located on the ground gives a more conservative result for the magnitude of the side stability angle beta, the higher located pivot point, that is, above the ground, may not be used. The point vertically projected on the ground for the stability triangle ABC may be used instead for some embodiments.

Restrictions imposed on certain embodiments.

In the following discussion concerning the model creation for some embodiments, the structural members are assumed to be stiff and rigid. Therefore, the effects of a possible deflection will not be assessed for the discussed embodiments. However, other embodiments may account for flexibility in the structural members of an industrial vehicle. For many embodiments, ignoring flexibility for structural members is acceptable for the basic truck chassis, the mast, the carriage and the forks, or other suitable components of an industrial vehicle. One reason may be because such structural components may undergo limited deflections as a result of being dimensioned with a safety factor on top of their design load to provide a long lifetime. For example, the frame of a heavy-duty forklift truck may be designed with an objective to reach at least 20000 working hours of duty. The mast, when lifted to the carrying position when the truck driven may be located about 250 mm above its lowered position. Therefore, at the carry position, a possible movement due to the mast's deflection is minimal.

Further, for the following discussion of certain embodiments, it is assumed that the mass distribution of the forklift truck is symmetrical about its longitudinal axis and that the truck will operate on a level surface. In addition, the payload is assumed to be positioned exactly at the symmetry plane that goes vertically through the longitudinal axis of the truck.

For the embodiments in the following discussion, only longitudinal motion is considered to permit usage of a two-wheel vehicle model. In other embodiments, longitudinal motion and lateral motion with its attendant roll motion may both be analyzed.

For the following embodiments, the tires are represented as a set of linear springs and dampers. For the described embodiments, the front and rear axles are utilizing the same type of tires. But, at the front axle there are four tires (two per each axle side) and at the rear axle just two (one per each axle side). Other embodiments may include just two tires on the front axle.

For the following discussion, the friction and stiction forces inside the tilt cylinders are assumed to be of a lower order when compared to the force applied to them when balancing the front end and the payload. Therefore, the friction and stiction forces inside the tilt cylinders are not included for the following discussion. In other embodiments, the friction and stiction forces inside the tilt cylinders may be accounted for. Likewise, the clamping moments at the pivot points between the front end and the forklift truck body and the front end and the tilt cylinder rod ends are not included in the following discussion. In other embodiments, the clamping moments at the pivot points between the front end and the forklift truck body and the front end and the tilt cylinder rod ends may be accounted for.

Static equilibrium.

As explained earlier, the horizontal position of the COG of the system comprising the front end that is, the mast and carriage, plus the payload can be determined by knowing (1) the position of the front end's COG under static equilibrium, and (2) the payload's mass.

Once the horizontal position of the COG for the combination of the front end and payload has been derived, such horizontal position can be utilized in a quasi-static or a dynamic equilibrium analysis and may be treated as a known parameter for either such analysis.

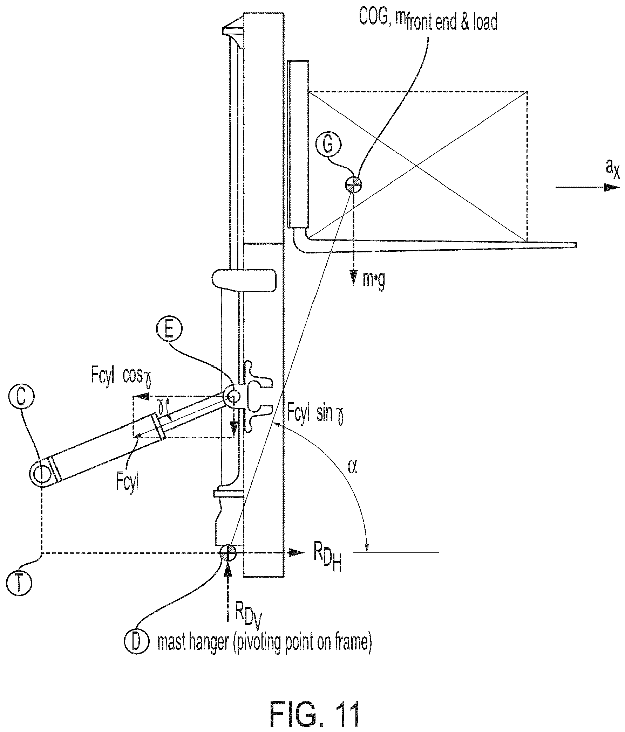

In one embodiment, the forklift truck picks up a payload from the ground and lifts the payload to a recommended height position for driving with the payload. For industrial vehicles such as forklifts, the recommended driving height position depends on the lifting capacity of the forklift truck and other suitable factors. For example, for some forklift trucks with a lifting capacity ranging from 8-52 tons a recommended height for driving with a payload is 500 mm. In this embodiment, the forklift truck is at rest on level ground and it does not move while lifting the payload from the ground to a height of 500mm. By looking from the side of the forklift truck (Figure 11) and focusing on the equilibrium of the combination of the front-end together with the payload, the forces acting on the combination can be drawn. These forces are (1) the supporting forces exerted from the body of the forklift truck onto the front end at its lower pivoting point depicted with the letter "D", (2) the force at the tilt cylinder bracket plate marked with the letter "E" which is drawn decomposed into a horizontal tilt cylinder force and a vertical tilt cylinder force, and (3) the gravitational force m·g acting at the COG of the combination of the front-end and the payload, denoted with the reference letter "G".

Because the forklift truck does not move (the force illustrated as $a_x$ is therefore zero) and is at an equilibrium, the following three equations can be derived. Figure 11 illustrates a side view of the lift truck's front-end with a load and relevant forces.

From inspection of Figure 11, the following equations are derived:

$$\sum F_x = 0 \Leftrightarrow -F_{0cyl}\cos\gamma + R_{D_H} = 0 \Leftrightarrow$$

$$R_{D_H} = F_{cyl}\cos\gamma \qquad\qquad \text{eq. 13}$$

$$\sum F_y = 0 \Leftrightarrow R_{D_V} - F_{0cyl}\sin\gamma - mg = 0 \Leftrightarrow$$

$$R_{D_V} = F_{0cyl}\sin\gamma + mg \qquad\qquad \text{eq. 14}$$

$$\sum M_D = 0 \Leftrightarrow mgDGcos\alpha - F_{0\,cyl}cos\gamma PE + F_{0\,cyl}sin\gamma DP = 0 \Leftrightarrow$$

$$DGcos\alpha = \frac{F_{0\,cyl}cos\gamma PE - F_{0\,cyl}sin\gamma DP}{mg} \qquad \text{eq. 15}$$

Here, the term shown as "DGcos$\alpha$" in equation eq. 15, depicts the horizontal position of the COG of the combination comprising the front-end and the payload.

The index 0 in the term $F_0$ cyl denotes the cylinder force during the static equilibrium.

After the payload has been raised to a predetermined height, such as 500 mm, for example, the physical distance from the mast's pivot point "D" to the position of the payload's COG does not change when the mast is tilted. Therefore, this known distance can be used in the quasi-static and full dynamic models, and in some embodiments, may be corrected by an eventual angle component, for example, for the forklift truck's main body or front end, that may be caused by the tires' squatting or possibly by an extra front end tilting angle due to the tilt cylinder spring stiffness.

Free body diagram in quasi-static equilibrium.

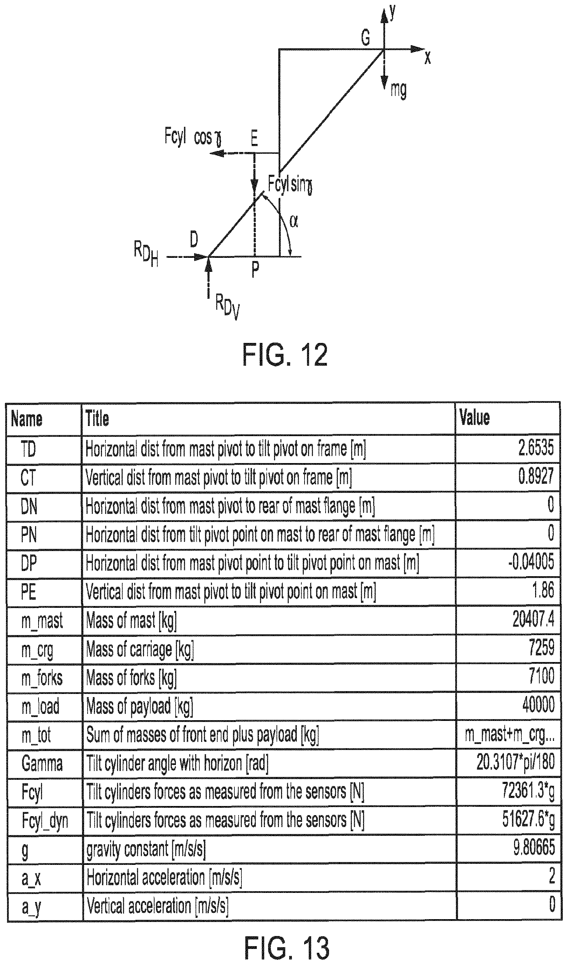

For the illustrated embodiment, after the static assessment described above, the forklift truck drives off with a constant acceleration to bring the recently picked payload to its destination. At the moment the forklift truck begins to drive, by looking from the side of the forklift truck (see Figure 12), and focusing on the equilibrium of the combination of the front-end together with the payload, the forces can be drawn on the free body diagram (see Figure 12).

Figure 12 illustrates forces FBD of the front-end and the payload.

These forces are (1) the supporting forces exerted from the body of the forklift truck onto the front end at its lower pivoting point depicted with the letter "D", (2) the force at the tilt cylinder bracket plate marked with the letter "E " which is drawn decomposed into a horizontal and a vertical tilt cylinder forces, (3) the gravitational force mg, and (4) the acceleration force max acting at the location of the COG resulting from the combination of the front-end and the payload, depicted with the reference letter "G".

For the illustrated embodiment, it is assumed that there will not be any tire deformation (rigid tires) due to the acceleration as a result of the load transfer and that the payload is not able to slide off the forks, and for this assessment, the inertial effect of the parts involved is neglected. The latter is reasonable because the mast is supported by the two tilting hydraulic cylinders that are hydraulically locked (the proportional valve that connects the ports at rod's side and piston's side that would allow for any oil flow, is closed).

Further, the tilt cylinder force in Figure 11 is not equal to the tilt cylinder force in Figure 12. Therefore, the decomposed tilt cylinder forces in Figure 12 are not equal to the decomposed tilt cylinder forces described with reference to Figure 11 where the static equilibrium was assessed.

Equations of motion in a quasi-static equilibrium.

Based on Figure 12, limiting the analysis to longitudinal acceleration for this embodiment, ($a_z$=$a_y$=0 m/s/s), and using a rigid tire and mast construction for this embodiment, and therefore neglecting the deflection of the mast and the tires, the following three equations of motion are derived:

$$\sum F_x = ma_x \Leftrightarrow -F_{cyl}cos\gamma + R_{D_H} = ma_x \Leftrightarrow$$

$$R_{D_H} = F_{cyl}cos\gamma + ma_x \qquad \text{eq. 16}$$

$$\sum F_y = 0 \Leftrightarrow R_{D_V} - F_{cyl}sin\gamma - mg = 0 \Leftrightarrow$$

$$\sum_{D} M_{D} = 0 \Leftrightarrow$$

$$mgDGcos\alpha - ma_x DGsin\alpha - F_{cyl}cos\gamma PE + F_{cyl}sin\gamma DP = 0 \Leftrightarrow$$

$$ma_x DGsin\alpha = mgDGcos\alpha - F_{cyl}cos\gamma PE + F_{cyl}sin\gamma DP \quad \text{eq. 18}$$

By substituting equation eq. 15 into equation eq. 18 it yields:

$$ma_x DGsin\alpha =$$

$$mg \frac{F_{0cyl}\cos\gamma PE - F_{0\,cyl}\sin\gamma DP}{mg} - F_{cyl}cos\gamma PE + F_{cyl}sin\gamma DP \quad \Leftrightarrow$$

$$ma_x DGsin\alpha =$$

$$F_{0\,cyl}\cos\gamma PE - F_{0\,cyl}\sin\gamma DP - F_{cyl}cos\gamma PE + F_{cyl}sin\gamma DP \quad \Leftrightarrow$$

$$DGsin\alpha = \frac{\cos\gamma PE(F_{0\,cyl} - F_{cyl}) - sin\gamma DP\,(F_{0\,cyl} - F_{cyl})}{ma_x} \quad \text{eq. 19}$$

Here, the term shown as "DGsinα" in equation eq. 19 depicts the vertical position of the COG of the mass system comprising the front-end plus the payload.

Therefore, with equation eq. 15 and equation eq. 19, the horizontal and the vertical position of the mass system comprising the front-end plus the payload is found.

Therefore, developing a dynamic model that will use the horizontal acceleration of the vehicle as an input leads to a dynamic determination of the vertical position of the payload's COG.

The creation of the quasi-static model in AMESIM.

The formulae as derived with respect to Figure 12 were utilized to create a model in AMESIM. No controls were added to the AMESIM model because one objective for this described embodiment is to derive the horizontal and vertical coordinates of the COG of the combined mass system comprising the front-end and the payload. The inputs in the AMESIM model are the parameterized geometrical and gravitational data of the parts involved. By using such data, the model can be modified and may be used for different front-end configurations (other masts with different lifting heights, different types of carriages, longer or shorter forks, etc.). In the described example, the front end parameters of a top loader, HYSTER® series HI 17 model H52XM12-CH which is designed to handle loaded ISO containers (in this case its gross mass, is 40000 kg) was used. The reason for using this truck's parameters in the described embodiment is because this truck has been recently tested statically on weighing scales carrying a payload where the mass and the location of the COG of the payload are known. Thus, the AMESIM model's output can be compared to a known, real-world example.

Other inputs for the AMESIM model are the measured horizontal acceleration by means of an accelerometer, together with the payload mass as derived from the measured pressure of the lifting cylinders together with the tilting cylinder force derived from the measured pressure of the tilting cylinders. Pressures in the various cylinders may be measured by means of pressure transducers, or directly measured by means of load cells. Therefore, in the AMESIM model, both the payload mass and the tilt cylinder force are treated as known parameters as shown in Figure 13.

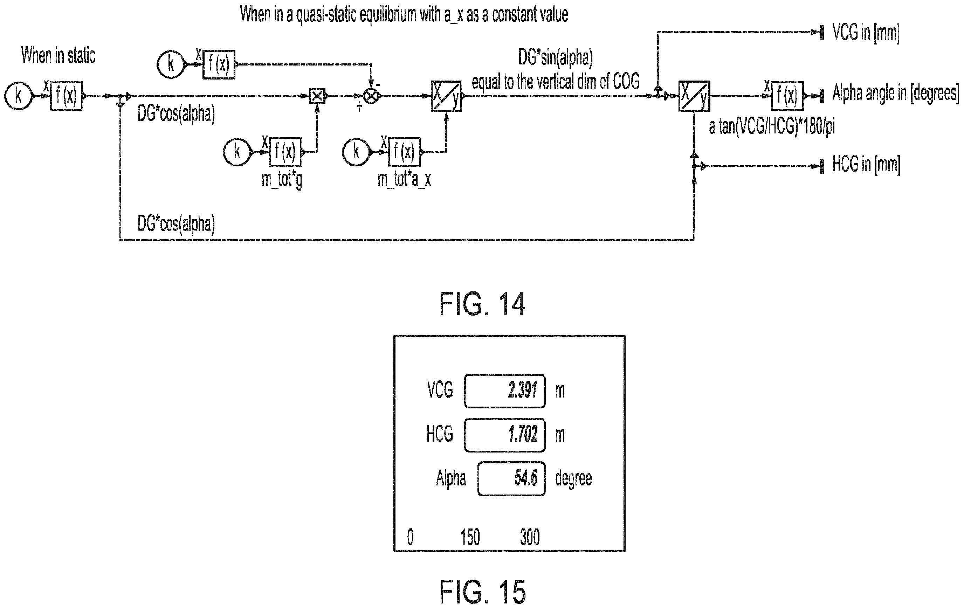

Figure 13 is a table showing the parameterized geometrical and gravitational data of the front-end plus payload. Figure 14 is an illustration of an example model for calculating the COG's horizontal and vertical position.

The model created in AMESIM is represented in Figure 14. The outputs of this model are the abscissa (horizontal) and ordinate (vertical) values of the position of the COG of the combined masses of the front end and the payload. Also, the angle alpha between a line passing through the pivot point "D" to the COG position of the combined front end and payload and a line passing through the pivot point "D" and parallel with the surface supporting the forklift truck is calculated.

The derived outputs may be linked to a dashboard as per Figure 15 for the user's convenience. Figure 15 is an illustration of an example dashboard showing the ordinate, the abscissa, and the angle alpha of the COG position.

This quasi-static model may provide insight for proceeding with the dynamic model.

Full dynamic model.

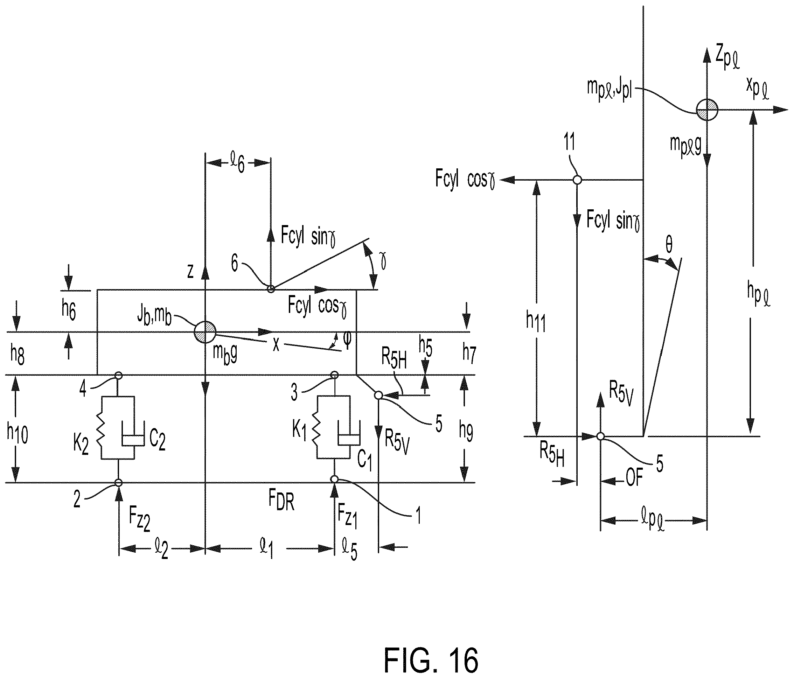

With the insight and the outcomes gained from the static and quasi-static equilibria analyses, above, the full dynamic model is discussed. One objective of this dynamic model embodiment is to determine, dynamically, the position of the COG of the payload. With the insight gained by the quasi-static model, a new free body diagram of a forklift truck is drawn per Figure 16, depicting the forklift truck during driving off after picking up a load. Thus, the forklift truck and the payload are under the influence of a positive longitudinal acceleration.

Figure 16 shows a FBD of a basic lift truck and its front end.

An Embodiment Explained.

A forklift truck is designed to carry, for its dimensions, relatively big loads. Therefore, forklift truck components are dimensioned to be stiff enough to cope with large loads and guarantee a long lifetime too. Therefore, the stiffness of the forklift truck frame and the front end (mast, carriage, and forks) is relatively high and can be considered for this embodiment as rigid bodies with all their mass and mass inertial moments concentrated at the COG location of each component. The motion behavior of the forklift truck frame, mast, carriage, forks, and other suitable structural components can be described for this embodiment by analyzing the motion of their respective COG's locations.

For the embodiment described, a symmetrical mass distribution about a longitudinal centerline that bi-sects the forklift truck is used for the structural components. In addition, the payload carried by the forklift truck is also taken to be symmetrical about the longitudinal axis that bi-sects the forklift truck for the described embodiment. In other embodiments, the payload may not be symmetrical about the forklift truck's longitudinal axis, and such differential loading may be determined by differential pressures in the tilt cylinders, for example.

For the described embodiment, with its symmetrical construction and loading, the model chosen for analysis is the so-called half car model. With the half car model, the front wheels are analyzed together as a single front wheel, and the rear wheels are analyzed together as a single rear wheel. The spring and damping stiffness of the front wheel tire characteristics are also analyzed together and the spring and dampening stiffness of the rear wheel tire characteristics are also analyzed together. Collectively, the wheel and tire characteristics are referred to as axle characteristics. In practice, this means that the spring K2 and damping stiffness C2 of the rear axle at point 2 (Figure 16), is twice as much as that of a single wheel at the front axle at the point 1 (Figure 16). And, the K1 and respectively the C1 is four times as big as a single tire because the forklift truck has four tires on the front axle and two tires on the rear axle. For example, it is common for forklift trucks with an 8 to 52 ton lifting capacity to be equipped with four tires at their front axle and two tires at their rear axle.

On a forklift truck, in contrast to passenger vehicles, the front and rear axles are directly mounted against the frame without any spring or damper system in between. Forklift truck operator comfort comes from the spring and damping characteristics of the tires. Therefore, in the described embodiment, there is not any un-sprung mass involved, in contrast to a personal vehicle.

In Figure 16, $m_b$ represents the mass of the forklift truck's body, and $m_{pl}$ the mass of the payload. For clarity reasons the COG positions of the mast, carriage, and forks are not shown in Figure 16. The tires are modelled as a spring damper system. Further a pitch angle $\varphi$ is included for the forklift truck body. The pitch angle $\varphi$ is included to depict the tire squatting due to the load transfer during the truck's acceleration. In addition, a pitch angle $\theta$ is included at the front end to capture a rotation of the front end due to the compressibility of the hydraulic oil in the hydraulic actuator chamber (which includes the oil inside the tilt cylinder and the oil inside the length of the hydraulic hose up to the proportional valve).

One objective of the described embodiment is to derive the COG position of the payload under dynamic, operating conditions. Insight gained during the above-described quasi-static equilibrium analysis may be considered for such dynamic determination. Therefore, a convenient analysis is to separate the two bodies to enable the derivation of the equations of motion for the front end. For this reason the forklift truck body has been separated from the front end (Figure 16) after introducing the reaction forces at their common pivoting points, that is, where the tilt cylinder is attached to the mast at point 11 and at the mast's pivot joint where the frame is supporting the front end at point 5. The same forces, but with an opposite sense have been added at the basic truck's pivot points as shown in Figure 16.

In Figure 16, point 1 represents the contact point of the front tires with the ground surface and point 2 represents the contact point of the rear tires with the ground surface. Point 3 represents the front axle's center, which coincides with the center of the front tires, and point 4 represents the rear axle's center, which coincides with the center of the rear tires. Point 5 represents the mast hanger point on the frame and on the mast because they are aligned once mast and frame are assembled together. Point 6 represents the tilt cylinder pivoting point on the frame, and point 11 represents the tilt cylinder pivoting point on the mast.

All points of interest are measured from the location of the truck's frame's COG where the local Cartesian coordinate system is centered, that is, the point 0, 0, 0. To the right is the positive direction of the x axis and vertically upward the positive direction of the z-axis. The positive y axis direction is going into the paper. Further, a clockwise pitch angle $\varphi$ is assumed for the truck frame and a clockwise pitch angle $\theta$ is assumed for the front end.

Deriving the equations of motion.

First, positions of interest are described in relation to the chosen Cartesian coordinate system *i.e,.* related to the position of the COG of the basic truck at position (x, z) as shown in Figure 16. The influence of the pitch angle $\varphi$ of the basic truck and the rotation angle $\theta$ of the front end are also included.

Once the position of the above points has been derived, their velocities and accelerations can also be derived. By sequentially taking the derivative of their position coordinates, the velocity (by the first derivative) and the acceleration (by the second derivative) of each point is found. Therefore, the location, the velocity, and the acceleration of each point will be described in relation to the position (x, z), the COG location of the basic truck with mass $m_b$.

For clarity reasons, at the front end, only the position of the payload mass $m_{pl}$ with its unknown coordinates ($\ell_{pl}$, $h_{pl}$) is shown. Of course, the masses of the mast, carriage and the forks and their COG positions will be included in the analysis.

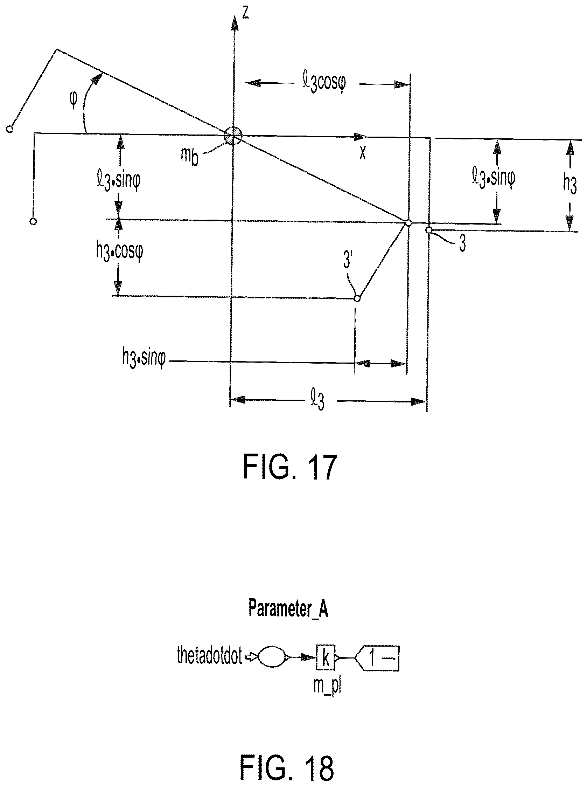

Following is a detailed explanation of the kinematic relation of one point (point 3, which is the center the front axle and coincides with the center of the front tires) for its vertical and horizontal position as shown in Figure 17. The derivation for the horizontal position, velocity, and acceleration resulted in eq. 20 and for its derivation for the vertical position, velocity, and acceleration resulted in eq. 21. All other points were derived similarly and can be found in Appendix B.

Figure 17 is an illustration showing the derivation of the position, velocity and acceleration of point 3 in relation to $m_b$.

$$x_3 = x + \ell_3\cos\varphi - h_3\sin\varphi$$

$$\dot{x}_3 = \dot{x} - \ell_3\dot{\varphi}\sin\varphi - \dot{\varphi}\cos\varphi h_3$$

$$\ddot{x}_3 = \ddot{x} - \ell_3\ddot{\varphi}\sin\varphi - \ell_3\dot{\varphi}^2\cos\varphi - h_3\ddot{\varphi}\cos\varphi + h_3\dot{\varphi}^2\sin\varphi \qquad \text{eq. 20}$$

$$z_3 = z - \ell_3\sin\varphi - h_3\cos\varphi$$

$$\dot{z}_3 = \dot{z} - \ell_3\dot{\varphi}\cos\varphi + h_3\dot{\varphi}\sin\varphi$$

$$\ddot{z}_3 = \ddot{z} - \ell_3\ddot{\varphi}\cos\varphi + \ell_3\dot{\varphi}^2\sin\varphi + h_3\ddot{\varphi}\sin\varphi + h_3\dot{\varphi}^2\cos\varphi \qquad \text{eq. 21}$$

Applying Newton's 2nd law for translation, in x and z directions for the front end, and for rotation about its pivoting point 5, the following equations of motion are derived:

$$+\longrightarrow \sum F_x = m_i\ddot{x}_i \Leftrightarrow$$

$$-F_{cyl}\cos\gamma + R_{5_H} =$$

$$m_{pl}\ddot{x}_{11} + m_{mast}\ddot{x}_{mast} + m_{crg}\ddot{x}_{crg} + m_{forks}\ddot{x}_{forks} \qquad \text{eq. 22}$$

$$-F_{cyl} \sin\gamma + R_{5v} - m_{pl}g - m_{mast}g - m_{crg}g - m_{forks}g =$$

$$m_{pl} \ddot{z}11 + m_{mast} \ddot{z}_{mast} + m_{crg} \ddot{z}_{crg} + m_{forks} \ddot{z}_{forks} \qquad eq.\ 23$$

$$+\circlearrowleft \sum M_5 = \sum J_i (\ddot{\theta}) + \sum m_i \ddot{x}_i (z_i - z_5) - \sum m_i \ddot{z}_i (x_i - x_5) \Leftrightarrow$$

$$-F_{cyl} \sin\gamma(x_{11}-x_5) - F_{cyl} \cos\gamma(z_{11}-z_5) - m_{pl}g(x_{pl}-x_5) - m_{mast}g(x_{mast}-x_5) -$$

$$m_{crg}g(x_{crg}-x_5) - m_{forks}g(x_{forks}-x_5) =$$

$$(J_{pl}+J_{mast}+J_{crg}+J_{forks})(\ddot{\theta}) + m_{pl}\ddot{z}_{pl} (x_{pl}-x_5) - m_{pl}\ddot{x}_{pl} (z_{pl}-z_5) +$$

$$+m_{mast}\ddot{z}_{mast} (x_{mast}-x5) - m_{mast}\ddot{x}_{mast} (z_{mast}-z_5) + m_{crg}\ddot{z}_{crg} (x_{crg}-x_5) -$$

$$m_{crg}\ddot{x}_{crg} (z_{crg}-z_5) +$$

$$+ m_{forks}\ddot{z}_{forks} (x_{forks}-x_5) - m_{forks}\ddot{x}_{forks} (z_{forks}-z_5) \qquad eq.\ 24$$

One embodiment for deriving the vertical position of payload $h_{pl}$ is to utilize equations eq. 22 and eq. 23 and solve (after performing all the substitutions) for $h_{pl}$. However, solving for $h_{pl}$ needs the forces acting at the pivoting point at position 5 as inputs, and therefore the addition of an expensive load sensor, or other suitable sensor, for measuring the vertical and horizontal reaction forces $R_5$ at position 5 as per Figure 16 may be needed.

Another embodiment, with a lesser economic impact (because load sensors cost ten times more than pressure sensors) utilizes equation eq. 24. Again, the variable that is separated for finding the vertical position of the location of the payload's COG, is the $h_{pl}$.

It is worth mentioning that the involved terms, $\ddot{z}_{pl}$ and $\ddot{x}_{pl}$, are also dependent on the $h_{pl}$ as shown per equations eq. 47 and eq. 53 in Appendix B. Therefore, substitution of the $\ddot{z}_{pl}$ and $\ddot{x}_{pl}$ into equation eq. 24 will create squared terms of $h_{pl}$ too.

By substituting equations eq. 20 and eq. 21 and eq. 40 to eq. 53 (Appendix B) of all the individual positions related to the chosen Cartesian axes system, into equation eq. 24 and thereafter performing the multiplications and then simplifying parentheses, it yields the following:

$$(J_{pl}+J_{mast}+J_{crg}+J_{forks})\ddot{\theta} + m_{pl}\ddot{\theta}h_{pl}{}^2 - m_{pl}\ddot{z}_5 h_{pl}\sin\theta +$$

$$m_{pl}\ddot{x}_5 h_{pl}\cos\theta - m_{pl}gh_{pl}\sin\theta - m_{pl}\ddot{z}_5\ell_{pl}\cos\theta + m_{pl}\ddot{\theta}\ell_{pl}{}^2 -$$

$$m_{mast}\ddot{z}_5\ell_{mast}\cos\theta - m_{mast}\ddot{z}_5 h_{mast}\sin\theta + m_{mast}\ddot{\theta}\ell_{mast}{}^2 + m_{mast}\ddot{\theta}h_{mast}{}^2$$

$$- m_{crg}\ddot{z}_5\ell_{crg}\cos\theta - m_{crg}\ddot{z}_5 h_{crg}\sin\theta + m_{crg}\ddot{\theta}\ell_{crg}{}^2 + m_{crg}\ddot{\theta}h_{crg}{}^2$$

$$- m_{forks}\ddot{z}_5\ell_{forks}\cos\theta - m_{forks}\ddot{z}_5 h_{forks}\sin\theta + m_{forks}\ddot{\theta}\ell_{forks}{}^2 +$$

$$m_{forks}\ddot{\theta}h_{forks}{}^2$$

$$- m_{pl}\ddot{x}_5\ell_{pl}\sin\theta - m_{mast}\ddot{x}_5\ell_{mast}\sin\theta + m_{mast}\ddot{x}_5 h_{mast}\cos\theta$$

$$- m_{crg}\ddot{x}_5\ell_{crg}\sin\theta + m_{crg}\ddot{x}_5 h_{crg}\cos\theta - m_{crg}\ddot{x}_5\ell_{crg}\sin\theta$$

$$- m_{forks}\ddot{x}_5\ell_{forks}\sin\theta + m_{forks}\ddot{x}_5 h_{forks}\cos\theta - m_{pl}g\ell_{pl}\cos\theta$$

$$- m_{mast}g\ell_{mast}\cos\theta - m_{mast}gh_{mast}\sin\theta - m_{crg}g\ell_{crg}\cos\theta - m_{crg}gh_{crg}\sin\theta$$

$$- m_{forks}g\ell_{forks}\cos\theta - m_{forks}gh_{forks}\sin\theta$$

$$+ F_{cyl}\cos\gamma(z_{11}-z_5) - F_{cyl}\sin\gamma(x_{11}-x_5) = 0 \qquad \text{eq. 24A}$$

The variable for finding the vertical position of the payload's COG is the $h_{pl}$.

From equation eq. 24A, after grouping terms together by separating the terms that are including the squared value of $h_{pl}{}^2$, those including the first power of $h_{pl}$ from the rest, a quadratic equation was formed which can be solved for the unknown variable $h_{pl}$. The quadratic equation of $h_{pl}$ can be depicted as follows per eq. 25:

$$h_{pl}{}^2 A + h_{pl}B + C = 0 \qquad \text{eq. 25}$$

This equation can be solved with means of the quadratic formula as per:

$$h_{pl} = \frac{-B}{2A} \pm \frac{\sqrt{B^2 - 4AC}}{2A} \qquad \text{eq. 26}$$

The full derivation of equation eq. 25 and the terms A, B, C, is included in Appendix C.

The terms A, B, C are found as:

$$A = m_{pl}\ddot{\theta}$$

$$B = - m_{pl}\ddot{z}_5\sin\theta + m_{pl}\ddot{x}_5\cos\theta - m_{pl}g\sin\theta$$

And

$$C = (J_{pl}+J_{mast}+J_{crg}+J_{forks})\ddot{\theta} - m_{pl}\,\ddot{z}_5\ell_{pl}\cos\theta + m_{pl}\ddot{\theta}\ell_{pl}{}^2$$

$$- m_{mast}\,\ddot{z}_5\ell_{mast}\cos\theta - m_{mast}\,\ddot{z}_5 h_{mast}\sin\theta + m_{mast}\ddot{\theta}\ell_{mast}{}^2 + m_{mast}\ddot{\theta}h_{mast}{}^2$$

$$- m_{crg}\,\ddot{z}_5\ell_{crg}\cos\theta - m_{crg}\,\ddot{z}_5 h_{crg}\sin\theta + m_{crg}\ddot{\theta}\ell_{crg}{}^2 + m_{crg}\ddot{\theta}h_{crg}{}^2$$

$$- m_{forks}\,\ddot{z}_5\ell_{forks}\cos\theta - m_{forks}\,\ddot{z}_5 h_{forks}\sin\theta$$

$$+ m_{forks}\ddot{\theta}\ell_{forks}{}^2 + m_{forks}\ddot{\theta}h_{forks}{}^2$$

$$- m_{pl}\,\ddot{x}_5\ell_{pl}\sin\theta - m_{mast}\,\ddot{x}_5\ell_{mast}\sin\theta + m_{mast}\,\ddot{x}_5 h_{mast}\cos\theta$$

$$- m_{crg}\,\ddot{x}_5\ell_{crg}\sin\theta + m_{crg}\,\ddot{x}_5 h_{crg}\cos\theta - m_{crg}\,\ddot{x}_5\ell_{crg}\sin\theta$$

$$- m_{forks}\,\ddot{x}_5\ell_{forks}\sin\theta + m_{forks}\,\ddot{x}_5 h_{forks}\cos\theta - m_{pl}\,g\ell_{pl}\cos\theta$$

$$- m_{mast}\,g\ell_{mast}\cos\theta - m_{mast}\,gh_{mast}\sin\theta - m_{crg}\,g\ell_{crg}\cos\theta - m_{crg}\,gh_{crg}\sin\theta$$

$$- m_{forks}\,g\ell_{forks}\cos\theta - m_{forks}\,gh_{forks}\sin\theta$$

$$+ F_{cyl}\cos\gamma(z_{11}-z_5) - F_{cyl}\sin\gamma(x_{11}-x_5)$$

Model creation and verification.

The derived equations of the dynamic model as described above were built in AMESIM for a virtual study of the model.

The coefficients A, B, C as described above were created piece wise in AMESIM.

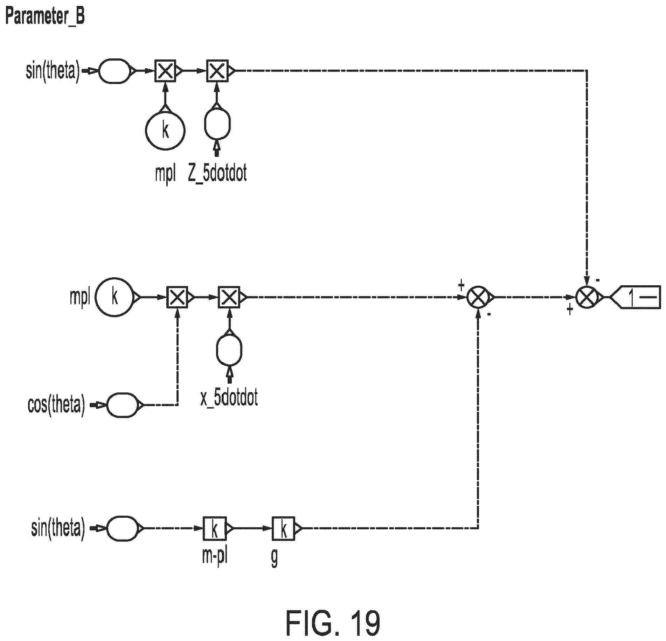

As shown per Figure 18 (parameter A), Figure 19 (parameter B), and Figures 20A-D (parameter C).

For verification reasons, a near to zero (to avoid division by zero) value was given as input for the variables $\ddot{\varphi}$ and $\ddot{\theta}$. Further, the Fcyl and Fcyl-dyn (the static c.q. the dynamic tilt cylinder force) and the horizontal acceleration was set equal to the values as shown per Figure 13. By doing this, it was checked whether the results would match to the result derived from a measurement done on the truck as described in Figure 2. Please notice that the distance shown in in Figure 2 is measured from the axle contact point to ground (shown as "x" dimension 2636 mm). To the pivot point one should subtract 303 mm for this series lift trucks (which equals to 2333 mm). The truck was put onto a set of six weighing scales and the front end was tilted to different angles. From the weighing scale readings it was found that the payload's COG position was located as shown in Figure 21.

After running the simulation model the results (also shown in Figure 21) were compared to those measured during the truck weighing and found to match within acceptable margins of error.

Figure 21 is a table showing the horizontal and the vertical position of the payload of the J117 H52XM-12CH truck.

The results of the simulated model for the parameters A, B, C, as also from the quadratic formula, are shown here after.

Figure 22 shows parameter A, $\dfrac{[kg\ rad]}{[s^2]}$ .

Figure 23 shows parameter B, $\dfrac{[kg\ rad\ m]}{[s^2]}$ .

$$\frac{[kg\ rad\ m^2]}{[s^2]}$$

Figure 24 shows parameter C, .

Figure 25 shows the transmitter output from the quadratic formula for the payload's vertical COG location, [m].

Figure 26 shows an exemplary dashboard with the payload's COG location, together with the angle formed between the virtual line from the mast pivot point to the COG location and the virtual line from the mast pivot point extending parallel with the surface supporting the forklift truck.

The algorithm may determine the payload's vertical COG position with an inaccuracy of approximately 14-17%. One input for the algorithm is the tilt cylinder force during a dynamic motion of the system caused by a horizontal acceleration (by driving) or deceleration (by braking). During such a maneuver, for example during acceleration, the pressure at the piston side of the tilt cylinder will be increased and the pressure at the rod side will be decreased. In a contained chamber like it is the space between the cylinder shell and the cylinder's piston, this can happen only if there will be a movement of the piston to compress the trapped hydraulic oil. This movement albeit small may also suffer by slip-stick phenomenon. During the stick phase the pressure increases and during the slip phase the pressure decreases, resulting in a rippled pressure signal and therefore a rippled derived payload's vertical COG position creating some, or potentially the majority of, the approximately 17% of inaccuracy. Slip stick is according to theory strongly related to the relative velocity between the two contacting surfaces. For velocities higher than the critical velocity this phenomenon may not be observed. Additional tests may be required to investigate whether this is the root cause of the ripple. A series of tests may be performed starting with a low acceleration magnitude and repeated with various acceleration magnitudes up to the maximum possible acceleration. The higher the acceleration the quicker the movement of the piston will be relative to the tilt cylinder's shell. Utilizing load cells for measuring directly the tilt cylinder forces may also suffer from this phenomenon.

As mentioned, the tilt cylinder forces are derived by measuring pressures. Alternatively, if the relative motion is lower or higher than the critical relative velocity between the tilt cylinder's piston and the shell, the derived force may be measured by using a load cell. The presence of static friction (known as stiction), Coulomb's friction, and viscous friction cannot be measured by pressure transducers. Therefore the derived tilt cylinder forces may be less accurate. However, this may be circumvented by the utilization of a (much more expensive) special tilt pin that includes a load cell. From the test data it was observed that the closer the payload's vertical COG was to the front end's pivot point, the more inaccurate the model's determination of the payload's vertical COG position was. The just described stiction force requires a certain threshold to be exceeded before a motion of the piston would start that will cause a pressure increase and thus a different derived force. Since the action line comes closer to the pivot point, less force is being detected at the tilt cylinder. When this force is lower than the threshold value of the stiction the piston does not move to cause a pressure change. Therefore the model derives then force inaccurately, leading to an inaccurately derived payload's vertical COG. This caused inaccuracy can be helped by the utilization of the mentioned special made tilt pins with a load cell.

Units dimensional analysis of parameters A, B, C.

A quadratic relation between the vertical position of the payload and the found parameters A, B, and C were derived above. In that process, multiple equations have been embedded to each derived parameter. A helpful process to check whether the relation found was derived properly is to check whether the units of each parameter and the units of this quadratic relation are in the correct dimensional units. This process is called a dimensional analysis. With this analysis, the actual units are plugged into the variables of the found relations. The end unit should match the dimension of the searched variable. In this case, the outcome depicts the height dimension, therefore the end unit should be in meters [m].

For parameters A, B, C as derived above, the units are:

$$\text{For A} \Rightarrow \frac{[kg\ rad]}{[s^2]}$$

$$\text{For B} \Rightarrow \frac{[kg\ rad\ m]}{[s^2]}$$

$$\text{For C} \Rightarrow \frac{[kg\ rad\ m^2]}{[s^2]}$$

Finally, for the quadratic formula from eq. 26:

$$h_{pl} = \frac{-B}{2A} \pm \frac{\sqrt{B^2 - 4AC}}{2A}$$

$$h_{pl} = \frac{\frac{[kg\ rad\ m]}{[s^2]}}{\frac{[kg\ rad]}{[s^2]}} \pm \frac{\sqrt{[\frac{[kg\ rad\ m]}{[s^2]}]^2 - \frac{[kg\ rad]}{[s^2]}\frac{[kg\ rad\ m^2]}{[s^2]}}}{\frac{[kg\ rad]}{[s^2]}}$$

After cancellation of identical units between the numerator and the denominator it is found that:

$$h_{pl} = [m]$$

Therefore, this dimensional analysis shows that the units of the vertical position of the payload as derived from the quadratic formula are correct, *i.e.*, in meter [m].

Testing and sensors determination.

To validate the model described for this embodiment, a relevant test procedure was defined. Before each test the mast should be lifted and lowered and the tilt cylinders should be retracted and extended back as such, that the mast will be brought back to its vertical position. The reason for this is to "wet" the lift and tilting cylinders with hydraulic oil to reduce the friction forces. After a 5 to 7 seconds pause to allow the whole system to dampen possible existing motions, the driver should start driving straight backwards until a constant speed of approximately 6 to 7 km/h has been reached and maintain this speed for 5 seconds and then decelerate to a full stop.

The model, in addition to the fixed geometric parameters of the forklift truck, requires as input the tilt cylinder forces, the horizontal acceleration, the vertical acceleration, and the pitch angular acceleration of the basic truck and of the front end, and the lifting height and tilt angle of the mast.

The tilt cylinder forces can be calculated by measuring the tilt cylinder pressure at the piston side and at the cylinder rod's side. By using the piston side and annular areas, the force can be calculated. The stiction forces induced by the seals around the piston and the rod have been ignored by assuming that the pressure caused by balancing the front end with the payload's mass is of a higher magnitude order as it was earlier indicated above.

The horizontal, vertical and lateral acceleration (the latter has not been used in the described embodiment, but may be used in other embodiments) of the basic truck and of the front end were measured by means of three inertial measurement unit ("IMU") sensors.

The IMU sensors measure the angle position and the angular velocity of the basic truck and of the front end about the three Cartesian axes. Unfortunately they could not measure angular acceleration, so the angular acceleration signal was derived by taking the first derivative of the angular velocity signals. As a back-up, the angular acceleration signal was also created mathematically based on the vertical accelerations of the two IMU sensors and the distance between them.

The lift height was measured with a string potentiometer positioned between the outer mast and the top of the inner mast.

The tilt cylinder's stroke was monitored, also by means of a string potentiometer. By knowing the amount of the tilt cylinder stroke, the angle between the front end and the basic truck can also be calculated by using the geometrical distances involved and the cosine rule.

The positions of the sensors are illustrated in Figures 29-36.

To validate the robustness of the model and to check for independency on reached lifting heights and different payload masses, a series of tests were performed with the following calibrated test weights and at different lifting heights as shown in Figure 27.

Figure 27 is a table showing the test weights, lifting heights, and driving or braking condition used.

The test weights (payloads) utilized in these tests have a known calibrated mass and also known mass properties, like their COG position. The mass moment of inertia of the test weight has been calculated using the known formula for a rectangular shape. The derived forces at the tilt cylinders together with the measured accelerations (angular and translational) were used as inputs for the model, and the derived position of the payload COG will be compared with the known position of the test payload's COG position.

Another method for validating the model's output may be to measure the axle reaction forces of the lift truck by two different tilting angles. Because parameters with strong influences on the translation of the front-end mass are the tilting angle and the ordinate (height) of the COG position, a different tilt angle will bring the front-end mass closer or further from the basic truck. Back tilting the front end causes an increase of the rear axle reaction force; in contrast forward tilting will cause the opposite. For two different tilt angles, for example a back tilted position and a forward tilted position, the differences between the rear axle reaction forces and the differences of the tilting angles can be used to derive the ordinate (height) of the COG position. In Figure 28, the different tilting position test procedure is illustrated. Under the front and rear axles weighing scales are placed, indicated with the WS balloon. The procedure may be accurate, for example, within 2.7 % of actual values. One reason for a deviation from actual values may be due to the tires squatting. Another reason for a deviation from the actual values may be the mast channels deflection; although mast channel deflection may be a less significant influence because the lifted height does not change during the measurement. The mast, for clarity reasons, is shown tilted forwardly but one must understand that this test may be performed by back tilting the front end, in other words, tilting the mast towards the basic truck; all that is needed are two different tilting positions. The derivations of the formulae are described in Appendix A.

Because of the need for the scales and the time required to perform this test, this procedure may not be for cost-effective for real time measurements made under operating conditions.

Figure 28 illustrates a validation of the combined COG front end and payload, by measuring the rear axle reaction force with weighing scales (WS).

Conclusions. One objective for at least some of the described embodiments is to find a way to determine the position of a payload's COG dynamically, under conditions similar to operating conditions, with a COG position determination that is at least 50% more accurate than currently used statistical estimations or other estimations used for stability programs such as determining the COG position by conservatively assuming its position. Another objective for at least some of the described embodiments is to increase the knowledge about forklift truck's stability.

Embodiments describe techniques for dynamically determining the position of the center of gravity for a forklift truck's payload under operational conditions. Such embodiments may be based on assessing the motion of the basic truck's mass and the motion of combination of the front-end's and the payload's mass. For some embodiments, analyzing the stability of the combination of the front-end's and payload's mass may be sufficient to determine the position of the COG of the payload's mass. Therefore, such an analysis may form the basis of algorithms used for dynamically determining the position of the payload's COG under dynamic, operating conditions.

In some embodiments, inputs for such algorithms may comprise the tilt cylinder forces and the angular and translational accelerations of the front end, which are variables that may be measured under operating conditions with dynamic movements, like acceleration, braking and lifting of the load.

Some embodiments of a dynamic model may be able to determine the payload's horizontal COG position with greater than 95% accuracy, for example, greater than 97% accuracy such as 97.3% accuracy. Some embodiments of a dynamic model may be able to determine the payload's vertical COG position with greater than 83% accuracy, for example, greater than or equal to an 86% accuracy, which accuracy may depend on the height to which a payload is lifted.

In some embodiments, a dynamic algorithm for a forklift truck's load moment (which is the product of the payload's mass multiplied by the horizontal distance measured from the payload's COG to the fork's face) indication system may be used. For example, because a sufficiently accurate horizontal position and vertical position of the payload's COG may be determined, and provided the mass can also be determined or is known, the accuracy of a load moment determination may be improved.

Appendix A.

From the front-end static equilibrium:

$$\sum F_y = 0 \Leftrightarrow$$

$$-m_{PL}g - m_{FRK}g - m_{CRG}g - m_{MST}g - F_{cyl}\sin\alpha + R_{P_{HOR}}$$

$$= 0$$

$$\text{eq. 27}$$

$$\sum \mathbf{M_P} = \mathbf{0} \Leftrightarrow$$

$$-m_{PL}gHCL_{PL} - m_{FRK}gHCG_{FRK} - m_{CRG}gHCG_{CRG}$$

$$-m_{MST}gHCG_{MST} + dF_{cyl}sin\alpha \dots + hF_{cyl}cos\alpha =$$

$$\mathbf{0} \Leftrightarrow HCG_{PL} =$$

$$\frac{dF_{cyl}sin\alpha + hF_{cyl}cos\alpha - g[\, m_{FRK}HCG_{FRK} + m_{CRG}HCG_{CRG} + m_{MST}gHCG_{MST}]}{m_{PL}g}$$

$$eq. \ 28$$

By defining the right part of equation eq. 28 equal to capital letter A it yields,

$$HCG_{PL} = A \qquad eq. \ 29$$

Further let us define the distance from the pivot point "P" to the payload's COG as the radius $R_1$. From inspection of figure the horizontal distance A of eq. 29 is equal to:

$$HCG_{PL} = A = R_1 sin\Psi_1 \Leftrightarrow$$

$$A = R_1 sin\Psi_1 \qquad eq. \ 30$$

By performing two sequential measurements of the tilt cylinder force by changing only the tilting angle we get:

$$HCG_{PL(\Psi_2)} = B = R_2 sin\Psi_2 \Leftrightarrow$$

$$B = R_2 sin\Psi_2 \qquad eq. \ 31$$

Further it holds when tilting the mast, that the distance from the pivot point to the COG position does not change. Therefore:

$$R_1 = R_2 \qquad eq. \ 32$$

By solving equations eq. 30 and eq. 31 for $R_1$ and sequentially for $R_2$ and by equalizing the results (holds, because of equation eq. 32 it yields:

$$\frac{A}{sin\Psi_1} = \frac{B}{sin\Psi_2} \Leftrightarrow \frac{sin\Psi_2}{sin\Psi_1} = \frac{B}{A} \qquad eq. \ 33$$

Angle $\Psi_1$ is the angle between the vertical line through the mast's pivot point at the frame and the line that connects this pivot point and the payload's COG.
At a different tilting angle and by assuming the mast is tilted forward by a few degrees by this additional angle delta $\delta$ (which its amount can be measured by an inclinometer or an angle sensor).

Therefore, the angle $\Psi_2$ formed after the tilting action is equal to:

$$\Psi_2 = \Psi_1 + \delta \qquad \text{eq. } 34$$

By substituting equation eq. 34 into equation eq. 33 it yields:

$$\frac{sin(\Psi_1+\delta)}{sin\Psi_1} = \frac{B}{A} \qquad \text{eq. } 35$$

From the trigonometric compound formula, it holds that:

$$\sin(a + b) = sina\ cosb + cosa\ sinb \qquad \text{eq. } 36$$

Therefore by applying equation eq. 36 on the left numerator term of equation eq. 35, it yields:

$$sin(\Psi_1 + \delta) = sin\ \Psi_1 cos\delta + cos\ \Psi_1 sin\delta \qquad \text{eq. } 37$$

By substituting equation eq. 37 into equation eq. 35 it yields;

$$\frac{sin\ \Psi_1 cos\delta + cos\ \Psi_1 sin\delta}{sin\Psi_1} = \frac{B}{A} \Leftrightarrow cos\delta + \frac{cos\ \Psi_1}{sin\Psi_1}\ sin\delta = \frac{B}{A} \Leftrightarrow$$

$$cos\delta + \frac{sin\delta}{tan\Psi_1} = \frac{B}{A} \Leftrightarrow \frac{sin\delta}{tan\Psi_1} = \frac{B}{A} - cos\delta \Leftrightarrow \frac{sin\delta}{tan\Psi_1} = \frac{B-Acos\delta}{A} \Leftrightarrow$$

$$tan\Psi_1 = \frac{Asin\delta}{B-Acos\delta} \Leftrightarrow \Psi_1 = arctan\frac{Asin\delta}{B-Acos\delta} \qquad \text{eq. } 38$$

By substituting equation eq. 38 into equation eq. 30 the radius $R_1$ can be found as:

$$R_1 = \frac{A}{sin(arctan\frac{Asin\delta}{B-Acos\delta})} \qquad \text{eq. } 39$$

Appendix B.

The vertical and horizontal relation of positions of interest, other than position 3, linked to position (x, z) based on the FBD as shown on Fig. 16.

$$x_4 = x - h_8 cos\varphi - \ell_2 sin\varphi$$

$$\dot{x}_5 = \dot{x} + \dot{\varphi}sin\varphi\ h_8 - \ell_2\dot{\varphi}cos\varphi$$

$$\ddot{x}_4 = x + \ddot{\varphi}sin\varphi\ h_8 + \dot{\varphi}^2 cos\varphi\ h_8 - \ell_2\ddot{\varphi}cos\varphi + \ell_2\dot{\varphi}^2 sin\varphi \qquad \text{eq. } 40$$

$$z_4 = z - h_8\cos\varphi + \ell_2\sin\varphi$$

$$\dot{z_4} = \dot{z} + \dot{\varphi}\sin\varphi\, h_8 + \ell_2\dot{\varphi}\cos\varphi$$

$$\ddot{z}_4 = \ddot{z} + \ddot{\varphi}\sin\varphi\, h_8 + \dot{\varphi}^2\cos\varphi\, h_8 - \ell_2\ddot{\varphi}\cos\varphi + \ell_2\dot{\varphi}^2\sin\varphi \quad \text{eq. } 41$$

$$x_5 = x + (\ell_1 + \ell_5)\cos\varphi - (h_5 + h_7)\sin\varphi$$

$$\dot{x}_5 = \dot{x} - (\ell_1 + \ell_5)\dot{\varphi}\sin\varphi - \dot{\varphi}\cos\varphi\,(h_5 + h_7)$$

$$\ddot{x}_5 = \ddot{x} - (\ell_1 + \ell_5)\ddot{\varphi}\sin\varphi - (\ell_1 + \ell_5)\dot{\varphi}^2\cos\varphi -$$

$$\ddot{\varphi}\cos\varphi(h_5 + h_7) + \dot{\varphi}^2\sin\varphi(h_5 + h_7) \qquad \text{eq. } 42$$

$$z_5 = z - (h_7 + h_5)\cos\varphi - (\ell_1 + \ell_5)\sin\varphi$$

$$\dot{z}_5 = \dot{z} + \dot{\varphi}\sin\varphi(h_7 + h_5) - (\ell_1 + \ell_5)\dot{\varphi}\cos\varphi$$

$$\ddot{z}_5 = \ddot{z} + \ddot{\varphi}\sin\varphi(h_7 + h_5) + \dot{\varphi}^2\cos\varphi(h_7 + h_5) - (\ell_1 + \ell_5)\ddot{\varphi}\cos\varphi$$

$$+ (\ell_1 + \ell_5)\dot{\varphi}^2\sin\varphi \qquad \text{eq. } 43$$

$$x_{11} = x_5 - OF\cos\theta + h_{11}\sin\theta$$

$$\dot{x}_{11} = \dot{x}_5 + OF\dot{\theta}\sin\theta + \dot{\theta}h_{11}\cos\theta$$

$$\ddot{x}_{11} = \ddot{x}_5 + OF\ddot{\theta}\sin\theta + OF\dot{\theta}^2\cos\theta + \ddot{\theta}\,h_{11}\cos\theta - \dot{\theta}^2\,h_{11}\sin\theta \qquad \text{eq. } 44$$

$$z_{11} = z_5 + OF\sin\theta + h_{11}\cos\theta$$

$$\dot{z}_{11} = \dot{z}_5 + OF\dot{\theta}\cos\theta - \dot{\theta}\,h_{11}\sin\theta$$

$$\ddot{z}_{11} = \ddot{z}_5 + OF\ddot{\theta}\cos\theta - OF\dot{\theta}^2\sin\theta - \ddot{\theta}\,h_{11}\sin\theta - \dot{\theta}^2\,h_{11}\cos\theta \qquad \text{eq. } 45$$

$$x_{pl} = x_5 + \ell_{pl}\cos\theta + h_{pl}\sin\theta$$

$$\dot{x}_{pl} = \dot{x}_5 - \ell_{pl}\dot{\theta}\sin\theta + \dot{\theta}\cos\theta\, h_{pl}$$

$$\ddot{x}_{pl} = \ddot{x}_5 - \ell_{pl}\ddot{\theta}\sin\theta - \ell_{pl}\dot{\theta}^2\cos\theta + \ddot{\theta}\, h_{pl}\cos\theta - \dot{\theta}^2\, h_{pl}\sin\theta \qquad \text{eq. 46}$$

$$z_{pl} = z_5 - \ell_{pl}\sin\theta + h_{pl}\cos\theta$$

$$\dot{z}_{pl} = \dot{z}_5 - \ell_{pl}\dot{\theta}\cos\theta - \dot{\theta}\, h_{pl}\sin\theta$$

$$\ddot{z}_{pl} = \ddot{z}_5 - \ell_{pl}\ddot{\theta}\cos\theta + \ell_{pl}\dot{\theta}^2\sin\theta - \ddot{\theta}\, h_{pl}\sin\theta - \dot{\theta}^2\, h_{pl}\cos\theta \qquad \text{eq. 47}$$

$$x_{mast} = x_5 + \ell_{mast}\cos\theta + h_{mast}\sin\theta$$

$$\dot{x}_{mast} = \dot{x}_5 - \ell_{mast}\dot{\theta}\sin\theta + h_{mast}\dot{\theta}\cos\theta$$

$$\ddot{x}_{mast} = \ddot{x}_5 - \ell_{mast}\ddot{\theta}\sin\theta - \ell_{mast}\dot{\theta}^2\cos\theta + h_{mast}\ddot{\theta}\cos\theta - h_{mast}\dot{\theta}^2\sin\theta \qquad \text{eq. 48}$$

$$z_{mast} = z_5 - \ell_{mast}\sin\theta + h_{mast}\cos\theta$$

$$\dot{z}_{mast} = \dot{z}_5 - \ell_{mast}\dot{\theta}\cos\theta - h_{mast}\dot{\theta}\sin\theta$$

$$\ddot{z}_{mast} = \ddot{z}_5 - \ell_{mast}\ddot{\theta}\cos\theta + \ell_{mast}\dot{\theta}^2\sin\theta - h_{mast}\ddot{\theta}\sin\theta - h_{mast}\dot{\theta}^2\cos\theta \qquad \text{eq. 49}$$

$$x_{crg} = x_5 + \ell_{crg}\cos\theta + h_{crg}\sin\theta$$

$$\dot{x}_{crg} = \dot{x}_5 - \ell_{crg}\dot{\theta}\sin\theta + h_{crg}\dot{\theta}\cos\theta$$

$$\ddot{x}_{crg} = \ddot{x}_5 - \ell_{crg}\ddot{\theta}\sin\theta - \ell_{crg}\dot{\theta}^2\cos\theta + h_{crg}\ddot{\theta}\cos\theta - h_{crg}\dot{\theta}^2\sin\theta \qquad \text{eq. 50}$$

$$z_{crg} = z_5 - \ell_{crg} \sin\theta + h_{crg} \cos\theta$$

$$\dot{z}_{crg} = \dot{z}_5 - \ell_{crg} \dot{\theta}\cos\theta - h_{crg}\dot{\theta}\sin\theta$$

$$\ddot{z}_{crg} = \ddot{z}_5 - \ell_{crg} \ddot{\theta}\cos\theta + \ell_{crg} \dot{\theta}^2\sin\theta - h_{crg}\ddot{\theta}\sin\theta - h_{crg}\dot{\theta}^2\cos\theta \qquad eq.\,51$$

$$x_{forks} = x_5 + \ell_{forks}\cos\theta + h_{forks}\sin\theta$$

$$\dot{x}_{forks} = \dot{x}_5 - \ell_{forks}\dot{\theta}\sin\theta + h_{forks}\dot{\theta}\cos\theta$$

$$\ddot{x}_{forks} = \ddot{x}_5 - \ell_{forks}\ddot{\theta}\sin\theta - \ell_{forks}\dot{\theta}^2\cos\theta + h_{forks}\ddot{\theta}\cos\theta - h_{forks}\dot{\theta}^2\sin\theta \quad eq.\,52$$

$$z_{forks} = z_5 - \ell_{forks} \sin\theta + h_{forks} \cos\theta$$

$$\dot{z}_{forks} = \dot{z}_5 - \ell_{forks} \dot{\theta}\cos\theta - h_{forks}\dot{\theta}\sin\theta$$

$$\ddot{z}_{forks} = \ddot{z}_5 - \ell_{forks}\ddot{\theta}\cos\theta + \ell_{forks}\dot{\theta}^2\sin\theta - h_{forks}\ddot{\theta}\sin\theta - h_{forks}\dot{\theta}^2\cos\theta \quad eq.\,53$$

Appendix C.

For convenience, here below equation eq. 24 is repeated.

$$-F_{cyl} \sin\gamma(x_{11}-x_5)+F_{cyl}\cos\gamma(z_{11}-z_5)-m_{pl}g(x_{pl}-x_5)-m_{mast}g(x_{mast}-x_5)-$$

$$m_{crg}g(x_{crg}-x_5)- m_{forks}g(x_{forks}-x_5) =$$

$$(J_{pl}+J_{mast}+J_{crg}+J_{forks})(\ddot{\theta})+m_{pl}\ddot{z}_{pl}(x_{pl}-x_5) - m_{pl}\ddot{x}_{pl}(z_{pl}-z_5) +$$

$$+m_{mast}\ddot{z}_{mast}(x_{mast}-x_5) - m_{mast}\ddot{x}_{mast}(z_{mast}-z_5)+ m_{crg}\ddot{z}_{crg}(x_{crg}-x_5) -$$

$$m_{crg}\ddot{x}_{crg}(z_{crg}-z_5) +$$

$$+ m_{forks}\ddot{z}_{forks}(x_{forks}-x_5) - m_{forks}\ddot{x}_{forks}(z_{forks}-z_5) \qquad eq.\,24$$

This is equal to,

$$(J_{pl}+J_{mast}+J_{crg}+J_{forks})(\ddot{\theta})+m_{pl}\ddot{z}_{pl}\,(x_{pl}\text{-}x_5) - m_{pl}\ddot{x}_{pl}\,(z_{pl}\text{-}z_5) +$$

$$+ m_{mast}\ddot{z}_{mast}\,(x_{mast}\text{-}x_5) - m_{mast}\ddot{x}_{mast}\,(z_{mast}\text{-}z_5)+ m_{crg}\ddot{z}_{crg}\,(x_{crg}\text{-}x_5) - m_{crg}\ddot{x}_{crg}\,(z_{crg}\text{-}z_5) +$$

$$+ m_{forks}\ddot{z}_{forks}\,(x_{forks}\text{-}x_5) - m_{forks}\ddot{x}_{forks}\,(z_{forks}\text{-}z_5)+ F_{cyl}\sin\gamma(x_{11}\text{-}x_5) - F_{cyl}\cos\gamma(z_{11}\text{-}z_5)+$$

$$+ m_{pl}g(x_{pl}\text{-}x_5)+ m_{mast}g(x_{mast}\text{-}x_5)+ m_{crg}g(x_{crg}\text{-}x_5)+ m_{forks}g(x_{forks}\text{-}x_5)$$

$$=0 \qquad\qquad\qquad\qquad \text{eq. 54}$$

By substituting equations eq. 46 and eq. 47 into equation eq. 54 it yields into:

$$\left(J_{pl}+J_{mast}+J_{crg}+J_{forks}\right)\left(\ddot{\theta}\right)+$$

$$+m_{pl}(x_{pl}\text{-}x_5)[\,\ddot{z}_5\,\text{-}(\ddot{\theta})\sin(\theta)\,h_{pl}\,\text{-}\,(\dot{\theta})^2\cos(\theta)\,h_{pl}\,+\,\ell_{pl}(\ddot{\theta})\cos(\theta)\,\text{-}\,\ell_{pl}(\dot{\theta})^2\sin(\theta)]\,+$$

$$-m_{pl}(z_{pl}\text{-}z_5)[\,\ddot{x}_5\,\text{-}(\ddot{\theta})\cos(\theta)\,h_{pl}\,+\,(\dot{\theta})^2\sin(\theta)\,h_{pl}\,\text{-}\,\ell_{pl}(\ddot{\theta})\sin(\theta)\,\text{-}\,\ell_{pl}(\dot{\theta})^2\cos(\theta)]\,+$$

$$m_{mast}\ddot{z}_{mast}\,x_{mast}\,\text{-}\,m_{mast}\ddot{z}_{mast}\,x_5\,\text{-}\,m_{mast}\ddot{x}_{mast}\,z_{mast}\,+\,m_{mast}\ddot{x}_{mast}\,z_5\,+$$

$$m_{crg}\ddot{z}_{crg}\,x_{crg}\,\text{-}\,m_{crg}\ddot{z}_{crg}\,x_5\,\text{-}\,m_{crg}\ddot{x}_{crg}\,z_{crg}\,+\,m_{crg}\ddot{x}_{crg}\,z_5\,+$$

$$m_{forks}\ddot{z}_{forks}\,x_{forks}\,\text{-}\,m_{forks}\ddot{z}_{forks}\,x_5\,\text{-}\,m_{forks}\ddot{x}_{forks}\,z_{forks}\,+\,m_{forks}\ddot{x}_{forks}\,z_5\,+$$

$$+\,F_{cyl}\sin\gamma(x_{11}\text{-}x_5)\,\text{-}\,F_{cyl}\cos\gamma(z_{11}\text{-}z_5)+$$

$$+\,m_{pl}g[\cancel{x_5}\,\text{-}\,h_{pl}\sin(\theta)\,+\,\ell_{pl}\cos(\theta)]\,+$$

$$\text{-}\,\cancel{m_{pl}g\,x_5}\,+$$

$$m_{pl}g[\cancel{x_5}\,\text{-}\,h_{mast}\sin(\theta)\,+\,\ell_{mast}\cos(\theta)\,]+$$

$$\text{-}\,\cancel{m_{pl}g\,x_5}\,+$$

$$m_{mast}g\,[\cancel{x_5}\,\text{-}\,h_{mast}\sin(\theta)\,+\,\ell_{mast}\cos(\theta)\,]$$

$$\text{-}\,\cancel{m_{mast}g\,x_5}\,+$$

$$m_{crg}g[\cancel{x_5}\,\text{-}\,h_{crg}\sin(\theta)\,+\,\ell_{crg}\cos(\theta)\,]$$

$$\text{-}\,\cancel{m_{crg}g\,x_5}\,+$$

$$m_{forks}g(\cancel{x_5}\,\text{-}\,h_{forks}\sin(\theta)\,+\,\ell_{forks}\cos(\theta)\,]+$$

$$\text{-}\,\cancel{m_{forks}g\,x_5}\,=0 \qquad\qquad\qquad \text{eq. }55$$

By substitution of equations eq. 49, eq. 48, eq. 51, eq. 50, eq. 53, and eq. 52 into eq. 55 after working out the parentheses cancelling out of opposite terms, and rearranging it yields:

$$Ah_{pl}^2 + Bh_{pl} + C = 0$$

which is the form of quadratic equation of one unknown hpl.

This can be solved with the standard solution of the quadratic equation as:

$$h_{pl} = \frac{-B + \sqrt{B^2 - 4AC}}{2A}$$

With,

$$A = m_{pl}\ddot{\theta}$$

$$B = -m_{pl}\,g\,\sin\theta - m_{pl}\,\ddot{z}_5\,\sin\theta + m_{pl}\,\ddot{x}_5\cos\theta$$

And

$$C = (J_{pl}+J_{mast}+J_{crg}+J_{forks})\ddot{\theta} + m_{pl}\,\ell_{pl}\,\ddot{z}_5\,\cos\theta + m_{pl}\,\ell_{pl}^2\,\ddot{\theta} +$$

$$+ m_{mast}\,\ddot{z}_5\,\ell_{mast}\,\cos\theta - m_{mast}\,\ddot{z}_5 h_{mast}\,\sin\theta +$$

$$m_{mast}\,\ddot{\theta}\,h_{mast}^2 + m_{mast}\,\ddot{\theta}\,l_{mast}^2 +$$

$$+ m_{crg}\,\ddot{z}_5\,\ell_{crg}\,\cos\theta - m_{crg}\,\ddot{z}_5\,h_{crg}\,\sin\theta + m_{crg}\,\ddot{\theta}\,h_{crg}^2 + m_{crg}\,\ddot{\theta}\,l_{crg}^2 +$$

$$+ m_{forks}\,\ddot{z}_5\,\ell_{forks}\,\cos\theta - m_{forks}\,\ddot{z}_5 h_{forks}\,\sin\theta + m_{forks}\,\ddot{\theta}h_{forks}^2 +$$

$$m_{forks}\,\ddot{\theta}l_{forks}^2 +$$

$$- m_{pl}\,\ddot{x}_5\,\ell_{pl}\,\sin\theta - m_{mast}\,\ddot{x}_5\,h_{mast}\,\cos\theta - m_{mast}\,\ddot{x}_5\,\ell_{mast}\,\sin\theta$$

$$- m_{crg}\,\ddot{x}_5\,h_{crg}\,\cos\theta - m_{crg}\,\ddot{x}_5\,\ell_{crg}\,\sin\theta +$$

$$- F_{cyl}\cos\gamma(z_{11}-z_5) - F_{cyl}\sin\gamma(x_5-x_{11}) + m_{pl}\,g\,\ell_{pl}\,\cos\theta + m_{mast}\,g\,\ell_{mast}\,\cos\theta - m_{mast}\,g\,h_{mast}\,\sin\theta +$$

$$+ m_{crg}\,g\,\ell_{crg}\,\cos\theta - m_{crg}\,g\,h_{crg}\,\sin\theta + m_{fork}\,g\,\ell_{forks}\,\cos\theta -$$

$$m_{forks}\,g\,h_{forks}\,\sin\theta +$$

$$- m_{forks}\,\ddot{x}_5\,h_{forks}\,\cos\theta - m_{forks}\,\ddot{x}_5\,\ell_{forks}\,\sin\theta$$

Appendix D.

Figures 29 through 36 are line drawing of photographs showing the position on the test truck of the utilized sensors.

Figure 29 is a line drawing of a photograph showing the lift height sensor and string potentiometer.

Figure 30 is a line drawing of a photograph showing the tilt cylinder stroke sensor and a string potentiometer.

Figures 31 and 32 are line drawings of photographs showing tilt cylinder pressure transducers.

Figure 33 is a line drawing of a photograph showing the bracket for the IMU sensor on the left hand at the rear side of the lift truck.

Figure 34 is a line drawing of a photograph showing the IMU sensor on the left hand at the rear side of the lift truck.

Figure 35 is a line drawing of a photograph showing the IMU sensor at the top of the inner mast of the lift truck.

Figure 36 is a line drawing of a photograph showing the IMU sensor on the top and at the center of the front axle of the lift truck.

Figure 37 is a flowchart illustrating an example method of determining the position of a combined center of gravity of a materials-handling vehicle. The materials-handling vehicles described herein may employ such methods for determining the position of its combined center of gravity when carrying a payload. For example, a materials-handling vehicle can include a mast, a lift carriage connected to the mast and configured to move the payload vertically, a tilt cylinder connected to the mast and configured to tilt the mast, and a pressure sensor connected to the tilt cylinder and configured to measure a pressure within the tilt cylinder. The vehicle can pick up the payload, position the payload to an initial height with the lift carriage, accelerate in a longitudinal direction (that is, in either a forward or a backward direction) for an initial period of time while the payload is at the initial height, determine a first pressure in the tilt cylinder during the initial period of time using a pressure sensor attached to or connected to the tilt cylinder, position the payload to a second height with the lift carriage and subject the vehicle to a second acceleration force in a longitudinal direction for a second period of time while the payload is at the second height, determine a second pressure in the tilt cylinder during the second period of time with the pressure sensor, and calculate, based on the first pressure and the second pressure, a position of the combined center of gravity of the materials-handling vehicle and the payload.

A materials-handling vehicle, such as a forklift truck, may incorporate a mast, a lift carriage connected to the mast and configured to move the payload vertically, a tilt cylinder connected to the mast and configured to tilt the mast, and a pressure sensor connected to the tilt cylinder and configured to measure a pressure within the tilt cylinder. The vehicle can further include a processor that is electrically connected to the pressure sensor and configured to calculate, based on two different pressures measurements from the pressure sensor, the position of the combined center of gravity of the vehicle and its payload. The first pressure measurement may be taken when the payload is positioned at a first height on the lift carriage while the materials-handling vehicle is subjected to a first acceleration force in a longitudinal direction, and a second pressure measurement may be taken when the payload is positioned at a second height on the lift carriage while the materials-handling vehicle is subjected to a second acceleration force in the longitudinal direction.

As described herein, the determination of the combined COG of the materials-handling vehicle and the payload can also determine the COG and mass of the payload and of the empty vehicle. In certain embodiments, the methods described herein may be directed toward determining the position and/or mass of the COG of one of the payload or the empty vehicle, depending upon the known and unknown variables of the algorithms used to calculate the combined COG. For example, in an embodiment, the methods determine the position of the COG of the payload for a vehicle carrying a payload, and/or the methods determine the mass of a payload for a vehicle carrying the payload. Such knowledge may aid in loading and/or packing of cargo onto a large vehicle, such as transport (semi) trucks, railroad cars, or ships, in order to balance the weights and/or COG of smaller payloads within the cargo arrangement.

Upon determining the dynamic combined COG of a vehicle and its payload, the dynamic vertical and horizontal centers of gravity of the payload can also be determined by known techniques. The payload's dynamic vertical COG can also be determined directly using equation 24A. For example, in an embodiment, the payload's vertical COG can be determined without the vehicle lifting the payload. In an embodiment, the payload's vertical COG can be determined by lifting a payload to one height, or by lifting a payload to at least one height. In certain embodiments, the payload's vertical COG can be determined by placing the payload at more than one height, such as by lifting a payload to two heights. In an embodiment, the payload's vertical COG can be determined without accelerating the vehicle carrying the payload. In an embodiment, the payload's vertical COG can be determined by accelerating the vehicle in a longitudinal direction while the vehicle carries the payload, or by twice accelerating the vehicle in a longitudinal direction while the vehicle carries the payload. In certain embodiments, the payload's vertical COG can be determined without using a pressure measurement. In an embodiment, the payload's vertical COG can be determined using one pressure measurement, or by using one or more pressure measurements, such as from a tilt cylinder.

One will appreciate that some aspects of the system and methods of dynamically determining the location of the combined COG for lift-trucks disclosed herein can also be utilized for other materials-handling vehicles, such as for example end-rider trucks, big trucks, and/or tow tuggers.

Conclusion

The terms and descriptions used above are set forth by way of illustration and example only and are not meant as limitations. Those skilled in the art will recognize that many variations, enhancements and modifications of the concepts described herein are possible without departing from the underlying principles of the invention. For example, skilled persons will appreciate that the subject matter of any sentence or paragraph can be combined with subject matter of some or all of the other sentences or paragraphs, except where such combinations are mutually exclusive. The scope of the invention should therefore be determined only by the following claims, claims presented in a continuation patent application, and equivalents to the foregoing claims.

Further embodiments:

1. A method for determining the position of a combined center of gravity of a materials-handling vehicle and a payload carried by the materials-handling vehicle, the materials-handling vehicle comprising a mast, a lift carriage connected to the mast and configured to move the payload vertically, a tilt cylinder connected to the mast and configured to tilt the mast, and a pressure sensor connected to the tilt cylinder and configured to measure a pressure within the tilt cylinder, the method comprising: picking up the payload with the materials-handling vehicle; positioning the payload to a first height on the lift carriage; subjecting the materials-handling vehicle to a first acceleration force in a longitudinal direction for a first period of time while the payload is at the first height; determining, with the pressure sensor, a first pressure in the tilt cylinder during the first period of time; positioning the payload to a second height on the lift carriage; subjecting the materials-handling vehicle to a second acceleration force in the longitudinal direction for a second period of time while the payload is at the second height; determining, with the pressure sensor, a second pressure in the tilt cylinder during the second period of time; and calculating, based on the first pressure and the second pressure, a position of the combined center of gravity of the materials-handling vehicle and the payload.

2. The method according to embodiment 1, wherein the materials-handling vehicle is a forklift truck.

3. The method according to embodiment 1, wherein calculating the position of the combined center of gravity of the vehicle and the payload is based on the following equation:

$$(J_{pl}+J_{mast}+J_{crg}+J_{forks})\ddot{\theta} + m_{pl}\ddot{\theta}h_{pl}{}^2 - m_{pl}\ddot{z}_5 h_{pl}\sin\theta + m_{pl}\ddot{x}_5 h_{pl}\cos\theta - m_{pl}gh_{pl}\sin\theta$$

$$- m_{pl}\ddot{z}_5 \ell_{pl}\cos\theta + m_{pl}\ddot{\theta}\ell_{pl}{}^2 - m_{mast}\ddot{z}_5 \ell_{mast}\cos\theta - m_{mast}\ddot{z}_5 h_{mast}\sin\theta + m_{mast}\ddot{\theta}\ell_{mast}{}^2$$

$$+ m_{mast}\ddot{\theta}h_{mast}{}^2 - m_{crg}\ddot{z}_5 \ell_{crg}\cos\theta - m_{crg}\ddot{z}_5 h_{crg}\sin\theta + m_{crg}\ddot{\theta}\ell_{crg}{}^2 + m_{crg}\ddot{\theta}h_{crg}{}^2$$

$$- m_{forks}\ddot{z}_5 \ell_{forks}\cos\theta - m_{forks}\ddot{z}_5 h_{forks}\sin\theta + m_{forks}\ddot{\theta}\ell_{forks}{}^2 + m_{forks}\ddot{\theta}h_{forks}{}^2$$

$$- m_{pl}\ddot{x}_5 \ell_{pl}\sin\theta - m_{mast}\ddot{x}_5 \ell_{mast}\sin\theta + m_{mast}\ddot{x}_5 h_{mast}\cos\theta$$

$$- m_{crg}\ddot{x}_5 \ell_{crg}\sin\theta + m_{crg}\ddot{x}_5 h_{crg}\cos\theta - m_{crg}\ddot{x}_5 \ell_{crg}\sin\theta$$

$$- m_{forks}\ddot{x}_5 \ell_{forks}\sin\theta + m_{forks}\ddot{x}_5 h_{forks}\cos\theta - m_{pl}g\ell_{pl}\cos\theta$$

$$- m_{mast}g\ell_{mast}\cos\theta - m_{mast}gh_{mast}\sin\theta - m_{crg}g\ell_{crg}\cos\theta - m_{crg}gh_{crg}\sin\theta$$

$$- m_{forks}g\ell_{forks}\cos\theta - m_{forks}gh_{forks}\sin\theta$$

$$+ F_{cyl}\cos\gamma(z_{11}-z_5) - F_{cyl}\sin\gamma(x_{11}-x_5) = 0.$$

4. The method according to embodiment 1, further comprising: transferring the calculated position of the combined center of gravity to a vehicle control system.

5. The method according to embodiment 1, wherein calculating the combined center of gravity comprises: calculating a vertical component of the combined center of gravity; and calculating a horizontal component of the combined center of gravity in the longitudinal direction.

6. The method according to embodiment 1, wherein positioning the payload to a first height on the lift carriage comprises lifting the payload from the ground to the first height, and positioning the payload to a second height on the lift carriage comprises further lifting the payload from the first height to the second height, which is greater than the first height.

7. The method according to embodiment 1, further comprising: calculating the position of the center of gravity of the payload.

8. A materials-handling vehicle comprising: a mast; a lift carriage connected to the mast and configured to move the payload vertically; a tilt cylinder connected to the mast and configured to tilt the mast; a pressure sensor connected to the tilt cylinder and configured to measure a pressure within the tilt cylinder; and a processor electrically connected to the pressure sensor and configured to calculate, based on two different pressure measurements from the pressure sensor, a position of the combined center of gravity of the materials-handling vehicle and the payload, a first pressure measurement taken when the payload is positioned at a first height on the lift carriage while the materials-handling vehicle is subjected to a first acceleration force in a longitudinal direction, and a second pressure measurement taken when the payload is positioned at a second height on the lift carriage while the materials-handling vehicle is subjected to a second acceleration force in the longitudinal direction.

9. The materials-handling vehicle according to embodiment 8, wherein the materials-handling vehicle is a forklift truck.

10. The materials-handling vehicle according to embodiment 8, wherein the processor is configured to determine the position of the combined center of gravity based on the following equation:

$$(Jpl+Jmast+Jcrg+Jforks)\ddot{\theta} + mpl\ddot{\theta}h_{pl}{}^2 - mpl\ddot{z}_5 h_{pl}\sin\theta + mpl\ddot{x}_5 h_{pl}\cos\theta - mplgh_{pl}\sin\theta$$

$$- mpl\,\ddot{z}_5\,\ell pl\cos\theta + mpl\ddot{\theta}\ell_{pl}{}^2 - mmast\,\ddot{z}_5\,\ell mast\,\cos\theta - mmast\,\ddot{z}_5 hmast\,\sin\theta + mmast\ddot{\theta}\ell_{mast}{}^2$$

$$+mmast\ddot{\theta}h_{mast}{}^2 - mcrg\,\ddot{z}_5\,\ell crg\,\cos\theta - mcrg\,\ddot{z}_5 hcrg\,\sin\theta + mcrg\ddot{\theta}\ell_{crg}{}^2 + mcrg\ddot{\theta}h_{crg}{}^2$$

$$- mforks\,\ddot{z}_5\,\ell forks\cos\theta - mforks\,\ddot{z}_5 hforks\,\sin\theta + mforks\ddot{\theta}\ell_{forks}{}^2 + mforks\ddot{\theta}h_{forks}{}^2$$

$$- mpl\,\ddot{x}_5\,\ell pl\sin\theta - mmast\,\ddot{x}_5\,\ell mast\sin\theta + mmast\,\ddot{x}_5 hmast\cos\theta$$

$$- mcrg\,\ddot{x}_5\,\ell crg\sin\theta + mcrg\,\ddot{x}_5 hcrg\cos\theta - mcrg\,\ddot{x}_5\,\ell crg\sin\theta$$

$$- mforks\,\ddot{x}_5\,\ell forks\sin\theta + mforks\,\ddot{x}_5 hforks\cos\theta - mpl\,g\ell pl\cos\theta$$

$$- mmast\,g\ell mast\cos\theta - mmast\,ghmast\sin\theta - mcrg\,g\ell crg\cos\theta - mcrg\,ghcrg\sin\theta$$

$$- mforks\,g\ell forks\cos\theta - mforks\,ghforks\sin\theta$$

$$+ Fcyl\cos\gamma(z11-z5) - Fcyl\,\sin\gamma(x11-x5) = 0.$$

11. The materials-handling vehicle according to embodiment 8, further comprising: a vehicle control system operably connected to the processor and configured to receive the calculated combined center of gravity.

12. The materials-handling vehicle according to embodiment 8, wherein the calculated combined center of gravity comprises a vertical component of the combined center of gravity and a horizontal component of the combined center of gravity in the longitudinal direction.

13. The materials-handling vehicle according to embodiment 8, wherein the processor is further configured to calculate the position of the center of gravity of the payload.

**Claims**

1. A method for determining the position of a combined center of gravity of a materials-handling vehicle (100) and a payload (110) carried by the materials-handling vehicle (100), the materials-handling vehicle (100) comprising a mast (120), a lift carriage (130) connected to the mast (120) and configured to move the payload (110) vertically, a tilt cylinder (140) connected to the mast (120) and configured to tilt the mast (120), and a pressure sensor (150) connected to the tilt cylinder (140) and configured to measure a pressure within the tilt cylinder (140), the method comprising:

   picking up the payload (110) with the materials-handling vehicle (100);
   positioning the payload (110) to a first height on the lift carriage (130);
   subjecting the materials-handling vehicle (100) to a first acceleration force in a longitudinal direction for a first period of time while the payload (110) is at the first height;
   determining, with the pressure sensor (150), a first pressure in the tilt cylinder (140) during the first period of time;
   positioning the payload (110) to a second height on the lift carriage (130);
   subjecting the materials-handling vehicle (100) to a second acceleration force in the longitudinal direction for a second period of time while the payload (110) is at the second height;
   determining, with the pressure sensor (150), a second pressure in the tilt cylinder (140) during the second period of time; and

calculating, based on the first pressure and the second pressure, a position of the combined center of gravity of the materials-handling vehicle (100) and the payload (110).

2. The method according to claim 1, wherein the materials-handling vehicle (100) is a forklift truck.

3. The method according to any one of the preceding claims, wherein calculating the position of the combined center of gravity of the vehicle (100) and the payload (110) is based on the following equation:

$$
(J_{pl}+J_{mast}+J_{crg}+J_{forks})\ddot{\theta} + m_{pl}\ddot{\theta}h_{pl}{}^2 - m_{pl}\ddot{z}_5 h_{pl}\sin\theta + m_{pl}\ddot{x}_5 h_{pl}\cos\theta - m_{pl}gh_{pl}\sin\theta
$$
$$
- m_{pl}\ddot{z}_5 \ell_{pl}\cos\theta + m_{pl}\ddot{\theta}\ell_{pl}{}^2 - m_{mast}\ddot{z}_5 \ell_{mast}\cos\theta - m_{mast}\ddot{z}_5 h_{mast}\sin\theta + m_{mast}\ddot{\theta}\ell_{mast}{}^2
$$
$$
+ m_{mast}\ddot{\theta}h_{mast}{}^2 - m_{crg}\ddot{z}_5 \ell_{crg}\cos\theta - m_{crg}\ddot{z}_5 h_{crg}\sin\theta + m_{crg}\ddot{\theta}\ell_{crg}{}^2 + m_{crg}\ddot{\theta}h_{crg}{}^2
$$
$$
- m_{forks}\ddot{z}_5 \ell_{forks}\cos\theta - m_{forks}\ddot{z}_5 h_{forks}\sin\theta + m_{forks}\ddot{\theta}\ell_{forks}{}^2 + m_{forks}\ddot{\theta}h_{forks}{}^2
$$
$$
- m_{pl}\ddot{x}_5 \ell_{pl}\sin\theta - m_{mast}\ddot{x}_5 \ell_{mast}\sin\theta + m_{mast}\ddot{x}_5 h_{mast}\cos\theta
$$
$$
- m_{crg}\ddot{x}_5 \ell_{crg}\sin\theta + m_{crg}\ddot{x}_5 h_{crg}\cos\theta - m_{crg}\ddot{x}_5 \ell_{crg}\sin\theta
$$
$$
- m_{forks}\ddot{x}_5 \ell_{forks}\sin\theta + m_{forks}\ddot{x}_5 h_{forks}\cos\theta - m_{pl} g\ell_{pl}\cos\theta
$$
$$
- m_{mast} g\ell_{mast}\cos\theta - m_{mast} gh_{mast}\sin\theta - m_{crg} g\ell_{crg}\cos\theta - m_{crg} gh_{crg}\sin\theta
$$
$$
- m_{forks} g\ell_{forks}\cos\theta - m_{forks} gh_{forks}\sin\theta
$$
$$
+ F_{cyl}\cos\gamma(z_{11}-z_5) - F_{cyl} \sin\gamma(x_{11}-x_5) = 0.
$$

4. The method according to any one of the preceding claims, further comprising:
transferring the calculated position of the combined center of gravity to a vehicle control system (160).

5. The method according to any one of the preceding claims, wherein calculating the combined center of gravity comprises:

calculating a vertical component of the combined center of gravity; and
calculating a horizontal component of the combined center of gravity in the longitudinal direction.

6. The method according to any one of the preceding claims, wherein positioning the payload (110) to a first height on the lift carriage (130) comprises lifting the payload (110) from the ground to the first height, and positioning the payload (110) to a second height on the lift carriage (130) comprises further lifting the payload (110) from the first height to the second height, which is greater than the first height.

7. The method according to any one of the preceding claims, further comprising:
calculating the position of the center of gravity of the payload (110).

8. A materials-handling vehicle (100) comprising:

a mast (120);
a lift carriage (130) connected to the mast (120) and configured to move the payload (100) vertically;
a tilt cylinder (140) connected to the mast (120) and configured to tilt the mast (120);
a pressure sensor (150) connected to the tilt cylinder (140) and configured to measure a pressure within the tilt cylinder (140); and
a processor (190) electrically connected to the pressure sensor (150) and configured to calculate, based on two different pressure measurements from the pressure sensor (150), a position of the combined center of gravity of the materials-handling vehicle (100) and the payload (110), a first pressure measurement taken when the payload (110) is positioned at a first height on the lift carriage (130) while the materials-handling vehicle (100) is subjected to a first acceleration force in a longitudinal direction, and a second pressure measurement taken when the payload (110) is positioned at a second height on the lift carriage (130) while the materials-handling vehicle (100) is subjected to a second acceleration force in the longitudinal direction.

9. The materials-handling vehicle (100) according to claim 8, wherein the materials-handling vehicle (100) is a forklift truck.

10. The materials-handling vehicle (100) according to any of claims 8-9, wherein the processor (190) is configured to determine the position of the combined center of gravity based on the following equation:

$$(J_{pl}+J_{mast}+J_{crg}+J_{forks})\ddot{\theta} + m_{pl}\ddot{\theta}h_{pl}{}^2 - m_{pl}\ddot{z}_5 h_{pl}\sin\theta + m_{pl}\ddot{x}_5 h_{pl}\cos\theta - m_{pl}gh_{pl}\sin\theta$$
$$- m_{pl}\ddot{z}_5 \ell_{pl}\cos\theta + m_{pl}\ddot{\theta}\ell_{pl}{}^2 - m_{mast}\ddot{z}_5 \ell_{mast}\cos\theta - m_{mast}\ddot{z}_5 h_{mast}\sin\theta + m_{mast}\ddot{\theta}\ell_{mast}{}^2$$
$$+m_{mast}\ddot{\theta}h_{mast}{}^2 - m_{crg}\ddot{z}_5 \ell_{crg}\cos\theta - m_{crg}\ddot{z}_5 h_{crg}\sin\theta + m_{crg}\ddot{\theta}\ell_{crg}{}^2 + m_{crg}\ddot{\theta}h_{crg}{}^2$$
$$- m_{forks}\ddot{z}_5 \ell_{forks}\cos\theta - m_{forks}\ddot{z}_5 h_{forks}\sin\theta + m_{forks}\ddot{\theta}\ell_{forks}{}^2 + m_{forks}\ddot{\theta}h_{forks}{}^2$$
$$- m_{pl}\ddot{x}_5 \ell_{pl}\sin\theta - m_{mast}\ddot{x}_5 \ell_{mast}\sin\theta + m_{mast}\ddot{x}_5 h_{mast}\cos\theta$$
$$- m_{crg}\ddot{x}_5 \ell_{crg}\sin\theta + m_{crg}\ddot{x}_5 h_{crg}\cos\theta - m_{crg}\ddot{x}_5 \ell_{crg}\sin\theta$$
$$- m_{forks}\ddot{x}_5 \ell_{forks}\sin\theta + m_{forks}\ddot{x}_5 h_{forks}\cos\theta - m_{pl}g\ell_{pl}\cos\theta$$
$$- m_{mast}g\ell_{mast}\cos\theta - m_{mast}gh_{mast}\sin\theta - m_{crg}g\ell_{crg}\cos\theta - m_{crg}gh_{crg}\sin\theta$$
$$- m_{forks}g\ell_{forks}\cos\theta - m_{forks}gh_{forks}\sin\theta$$
$$+ F_{cyl}\cos\gamma(z_{11}-z_5) - F_{cyl}\sin\gamma(x_{11}-x_5) = 0.$$

11. The materials-handling vehicle (100) according to any of claims 8-10, further comprising:
a vehicle control system (160) operably connected to the processor (190) and configured to receive the calculated combined center of gravity.

12. The materials-handling vehicle (100) according to any of claims 8-11, wherein the calculated combined center of gravity comprises a vertical component of the combined center of gravity and a horizontal component of the combined center of gravity in the longitudinal direction.

13. The materials-handling vehicle (100) according to any of claims 8-12, wherein the processor (190) is further configured to calculate the position of the center of gravity of the payload (110).

FIG. 1

| | Payload [kg] | Front axle $F_{Z_1}$ [kg] | Rear axle $F_{Z_2}$ [kg] | $\Delta F_{Z_2}$ [kg] | x [mm] | WB [mm] | a [mm] |
|---|---|---|---|---|---|---|---|
| Empty | 0 | 55080 | 30240 | - | - | 5900 | 2091 |
| Loaded | 40000 | 112949 | 12371 | 17869 | 2636 | 5900 | - |

FIG. 2

FIG. 3

FIG. 4

Combined COG

COG of
Payload

COG of the FLT

(A)(B)                                        (C)

A

T, E

D ──────────────────────►────────────── C
r

L

L

K

B

# FIG. 5

FIG. 6

FIG. 7

FIG. 8

FIG. 9

FIG. 10

COG, m<sub>front end & load</sub>

FIG. 11

FIG. 12

| Name | Title | Value |
|---|---|---|
| TD | Horizontal dist from mast pivot to tilt pivot on frame [m] | 2.6535 |
| CT | Vertical dist from mast pivot to tilt pivot on frame [m] | 0.8927 |
| DN | Horizontal dist from mast pivot to rear of mast flange [m] | 0 |
| PN | Horizontal dist from tilt pivot point on mast to rear of mast flange [m] | 0 |
| DP | Horizontal dist from mast pivot point to tilt pivot point on mast [m] | -0.04005 |
| PE | Vertical dist from mast pivot to tilt pivot point on mast [m] | 1.86 |
| m_mast | Mass of mast [kg] | 20407.4 |
| m_crg | Mass of carriage [kg] | 7259 |
| m_forks | Mass of forks [kg] | 7100 |
| m_load | Mass of payload [kg] | 40000 |
| m_tot | Sum of masses of front end plus payload [kg] | m_mast+m_crg... |
| Gamma | Tilt cylinder angle with horizon [rad] | 20.3107*pi/180 |
| Fcyl | Tilt cylinders forces as measured from the sensors [N] | 72361.3*g |
| Fcyl_dyn | Tilt cylinders forces as measured from the sensors [N] | 51627.6*g |
| g | gravity constant [m/s/s] | 9.80665 |
| a_x | Horizontal acceleration [m/s/s] | 2 |
| a_y | Vertical acceleration [m/s/s] | 0 |

FIG. 13

FIG. 14

FIG. 15

FIG. 16

FIG. 17

Parameter_A

thetadotdot ⇒ ◯ → ▶ [k] ⟨1 —
m_pl

FIG. 18

Parameter_B

FIG. 19

Parameter_C

FIG. 20A

52

**Parameter_C**

FIG. 20B

FIG. 20C

FIG. 20D

| | As weighted [mm] | As derived from the model [mm] |
|---|---|---|
| Horizontal position of payload's COG | 2333 | 2370 |
| Vertical position of payload's COG | 1295 | 1315 |

## FIG. 21

## FIG. 22

FIG. 23

FIG. 24

FIG. 25

FIG. 26

| Payload mass [kg] | Lifting height [m] | Stationary | Driving | Braking |
|---|---|---|---|---|
| 2000 | 0.50 | Yes | Yes | Yes |
| 2000 | 3.00 | Yes | Yes (rewards) | Yes (rewards) |
| 3040 | 0.50 | Yes | Yes | Yes |
| 3040 | 3.00 | Yes | Yes (rewards) | Yes (rewards) |
| 5900 | 0.50 | Yes | Yes | Yes |
| 5900 | 3.00 | Yes | Yes (rewards) | Yes (rewards) |

## FIG. 27

## FIG. 28

FIG. 29

FIG. 30

FIG. 31

FIG. 32

FIG. 33

FIG. 34

FIG. 35

FIG. 36

Pick up a payload with a materials-handling vehicle having a mast, a lift carriage connected to the mast and configured to move the payload vertically, a tilt cylinder connected to the mast and configured to tilt the mast, and a pressure sensor connected to the tilt cylinder and configured to measure a pressure within the tilt cylinder                310

Position the payload to a first height on the lift carriage                320

Subject the materials-handling vehicle to a first acceleration force in a longitudinal direction for a first period of time while the payload is at the first height                330

Determine, with the pressure sensor, a first pressure in the tilt cylinder during the first period of time                340

Position the payload to a second height on the lift carriage                350

Subject the materials-handling vehicle to a second acceleration force in the longitudinal direction for a second period of time while the payload is at the second height                360

Determine, with the pressure sensor, a second pressure in the tilt cylinder during the second period of time                370

Calculate, based on the first pressure and the second pressure, a position of the combined center of gravity of the materials-handling vehicle and the payload.                380

FIG. 37

**Europäisches Patentamt**
**European Patent Office**
**Office européen des brevets**

## EUROPEAN SEARCH REPORT

Application Number

EP 21 20 0418

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/229988 A1 (GAULT ROSS T [US] ET AL) 16 August 2018 (2018-08-16) * abstract; figures 1-3 * * paragraphs [0009], [0011], [0032], [0036], [0039], [0044], [0052], [0055], [0056] * | 1-13 | INV. G01M1/12 |
| A | WO 2020/121613 A1 (TOYOTA JIDOSHOKKI KK [JP]) 18 June 2020 (2020-06-18) * abstract; figures 1,2,4,5,7,9 * * paragraphs [0005] – [0007], [0039], [0041], [0073], [0098] * | 1-13 | |

TECHNICAL FIELDS SEARCHED (IPC)

G01M
G01G

The present search report has been drawn up for all claims

| Place of search | Date of completion of the search | Examiner |
|---|---|---|
| The Hague | 16 February 2022 | Mihai Vasile |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 0418

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2022

| Patent document cited in search report | | Publication date | Patent family member(s) | | Publication date |
|---|---|---|---|---|---|
| US 2018229988 | A1 | 16-08-2018 | NONE | | |
| WO 2020121613 | A1 | 18-06-2020 | EP | 3896024 A1 | 20-10-2021 |
| | | | JP | 2020093741 A | 18-06-2020 |
| | | | US | 2021395063 A1 | 23-12-2021 |
| | | | WO | 2020121613 A1 | 18-06-2020 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63086282